# EUROPEAN PATENT SPECIFICATION

(11) **EP 1 803 780 B1**
(45) Date of publication and mention of the grant of the patent: **25.03.2009**
(21) Application number: 05112508.6
(22) Date of filing: 20.12.2005
(51) Int. Cl.: C09D 11/00, B41C 1/10, B41J 2/01, C09B 29/00, C09B 29/08, C09B 29/30, C09B 31/02, C09B 31/08, C09B 1/20, C09B 55/00, C09B 69/10

(54) **Contrast dyes for inkjet lithographic printing plates**
Kontrastfarbstoffe für Tintenstrahllithographiedruckplatten
Colorants de contraste pour des plaques de l'impression lithographique à jet d'encre

(43) Date of publication of application: 04.07.2007
(73) Proprietor: Agfa Graphics N.V., 2640 Mortsel (BE)
(72) Inventor: Loccufier, Johan, 2640, Mortsel (BE); Verdonck, Emiel, 2640, Mortsel (BE)
(74) Representative: Goedeweeck, Rudi

(56) References cited:
- EP-A- 0 347 803
- EP-A- 0 771 860
- EP-A- 1 157 825
- EP-A- 1 157 826
- EP-A- 1 157 827
- EP-A- 1 157 828
- EP-A- 1 211 063
- EP-A- 1 219 415
- EP-A- 1 577 356
- WO-A-01/42211
- WO-A-01/54915
- US-A- 5 830 912
- US-B1- 6 742 886

## Description

### Technical field

The present invention relates to lithographic printing plates and a method for their preparation by means of inkjet. More specifically, it relates to a method to generate a visual contrast on the printing plate precursor using contrast dyes that are persistent to gumming and other post treatments of an imaged printing plate precursor.

### Background art

Over the last decade, the graphic arts workflow has changed dramatically, evolving from a computer to film work flow to a computer to plate workflow. Direct plate making is becoming the dominating technology in the market, preferentially using thermal or photo-polymerization technology. The majority of the commercial systems are processing required systems, using an alkaline developer to process the plates after imaging. In recent years, there is a clear tendency towards printing plates requiring no processing, such as for example a developing step to obtain the lithographic image.

Also over the last decade, the image quality of inkjet systems has evolved to a level where it becomes an option for direct imaging of printing plate precursors, competitive with the classical workflow. Direct plate making by inkjet has been described in the patent literature. Several conceptual approaches have been described. Directly hydrophobizing lithographic printing plate precursors, using a hydrophobic ink is a clearly preferred option.

Several types of hydrophobic inks have been described in the patent literature.
US 6742886 (KPG) discloses a method of preparing a printing plate by imagewise application onto a substrate of an inkjettable composition consisting essentially of an oleophilic polymer in an organic solvent.
US 5511477 (IDANIT TECH LTD) discloses a method for the production of printing plates by inkjet printing with a photopolymeric ink composition on a substrate and subjecting the resulting printed substrate to UV radiation thereby curing the ink composition.

Inkjet systems as the ones of the foregoing patents make use of organic solvent inks or UV-curing technology. However, aqueous based inkjet inks, requiring only a drying step after jetting thereby greatly reducing problems related to toxicology or to complexity of design of plate setters, have become the preferred choice for designing new inkjet plate setters.

An inkjet ink for direct plate making by inkjet has to meet several requirements at the same time. The chemistry in the ink should allow:
- dot spread control on the surface of the printing plate precursor to guarantee the initial image quality,
- a high run length under several press conditions,
- a good resistance against press chemicals, and
- a good visual contrast on the plate to allow visual inspection of the printing plate before mounting on the press and in future re-use of the printing plate.

Several aqueous based inks have been disclosed for preparing printing plates by inkjet.

EP 1157826 A (AGFA) discloses an aqueous inkjet fluid containing a oleophilizing compound having in its chemical structure a 1,2-dihydroxy aryl functional group, such as a catechol, a pyrogallol, and a salicylic acid.

EP 1157827 A (AGFA) discloses an aqueous inkjet fluid containing an oleophilizing compound having an 8-hydroxyquinoline moiety. Preferred compounds are 8-hydroxyquinolines, 7-hydroxybenzimidazoles, and 7-hydroxybenztriazoles.

EP 1157828 A (AGFA) discloses an inkjet fluid containing an oleophilizing compound containing a 1,3-dicarbonyl group in its chemical formula.

EP 1211063 A (AGFA) discloses an inkjet fluid containing an oleophilizing compound having in its chemical structure a boron containing group capable of reacting with said surface of said lithographic receiver.

EP 1219415 A (AGFA) discloses an inkjet fluid containing an oleophilizing compound having in its chemical structure a functional amidine group capable of reacting with the surface of a lithographic receiver. Preferably the amidine group is an imidazolidine group.

US 6532871 (KPG) discloses a method of controlling the resolution of an image formed on a substrate, comprising:
(a) providing a substrate; and
(b) applying an image to the substrate by imagewise directly applying upon the substrate a fluid composition comprising at least one surfactant which is interfacially matched to the substrate, in which the dot size of the fluid composition on the substrate in the presence of the surfactant is less than the dot size of the fluid composition on the substrate in the absence of the surfactant, wherein an ink-absorbing layer is not applied to the substrate. In a preferred embodiment fluorinated surfactants on an anodized aluminium support are disclosed.

None of the above disclosed inkjet fluids containing a hydrophobizing or oleophilizing compound generate the necessary plate contrast for allowing visual inspection of the plate before mounting on the press, or produces a printing plate still exhibiting good contrast in the lithographic image after gumming or similar post-treatments. For good contrast, the presence of a dye is required.

EP 1157825 A (AGFA) discloses an aqueous inkjet fluid containing an oleophilizing compound having in its chemical structure a phosphorous containing group capable of reacting with the surface of a lithographic receiver. In the example Acid Black (Cl20470 is used as a dye.

EP 0882584 A (KODAK) discloses a method of preparing a printing plate comprising producing an oleophilic image on the surface of a support by inkjet printing the image on the surface using an aqueous solution or aqueous colloidal dispersion of a salt of a hydrophobic organic acid. In example 3 the dye Acid Blue 92 was used in the aqueous inkjet ink to make the inkjet image more visible.

However, it has been found that Acid Black (C120470), Acid Blue 92 and other dyes, such as crystal violet or Direct Blue 199 that are frequently used in conventional lithographic plates, are not resistant against gumming solutions used on printing plates prepared by inkjet. As a result, the plate looses contrast upon gumming and visual inspection of the plate is no longer possible.

Therefore, it would be desirable to have a method of preparing lithographic printing plates using inkjet technology, which delivers printing plates exhibiting good contrast of the lithographic image even after gumming or other post-treatments and which avoids the use of radiation curable materials or high concentrations of organic solvents.

### Object of the invention

It is an object of the present invention to provide contrast dyes for preparing lithographic printing plates exhibiting good contrast of the lithographic image even after gumming or other post-treatments.

It is a further object of the present invention to provide a lithographic printing plate exhibiting good contrast of the lithographic image.

These and other objects of the invention will become apparent from the description hereinafter.

### Summary of the invention

It was found that lithographic images exhibiting good contrast which persisted after gumming, were obtained by using an inkjet ink comprising a special type of contrast dye having in its chemical structure a phosphorous containing group capable of reacting with the surface of a lithographic receiver, a chromophore group absorbing in the visual spectrum and a hydrophobic aliphatic chain.

Moreover it was found that it was possible to print with a lithographic image derived from the inkjet ink comprising that special type contrast dye without the need of adding an oleophilizing or ink-uptaking compound.

Objects of the present invention are realized with a contrast dye for preparing a lithographic printing plate comprising at least one A, D and B group wherein
A represents a phosphorous containing group capable of reacting with the surface of a lithographic receiver;
D represents a chromophore group absorbing light between 400 and 700 nm; and
B represents an aliphatic group of at least 6 carbon atoms.

Objects of the present invention are also realized with a lithographic printing plate comprising such a contrast dye.

Further advantages and embodiments of the present invention will become apparent from the following description.

### Detailed description of the invention :

### Definitions

The term "lithographic printing plate" as used in disclosing the present invention, means a plate having a lithographic image on its surface.

The term "lithographic image" as used in disclosing the present invention means an image on a lithographic printing plate consisting of printing areas and non-printing areas.

The term "printing areas" as used in disclosing the present invention, means the areas of the image on a lithographic printing plate that are ink-receptive.

The term "non-printing areas" as used in disclosing the present invention, means the areas of the image on a lithographic printing plate that are ink-repellent.

The term "lithographic printing plate precursor" as used in disclosing the present invention means any plate with a surface capable of forming a lithographic image.

The term "dye", as used in disclosing the present invention, means a colorant having a solubility of 10 mg/L or more in the medium in which it is applied and under the ambient conditions pertaining.

The term "chromophore group", as used in disclosing the present invention, means a group with an absorption between 400 nm and 700 nm.

The term "DP" is used in disclosing the present application as an abbreviation for degree of polymerization, i.e. the number of structural units (monomers) in the average polymer molecule.

The term "alkyl" means all variants possible for each number of carbon atoms in the alkyl group i.e. for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl etc.

The term "acyl group" means a -(C=O)-aryl group, a -(C=O)-alkyl group, a -(C=O)-heteroaryl group and -(C=O)-heterocyclic group.

The term "aliphatic group" means saturated straight chain, branched chain and alicyclic hydrocarbon groups.

The term "unsaturated aliphatic group" means straight chain, branched chain and alicyclic hydrocarbon groups which contain at least one double or triple bond.

The term "aromatic group" as used in disclosing the present invention means an assemblage of cyclic conjugated carbon atoms, which are characterized by large resonance energies, e.g. benzene, naphthalene and anthracene.

The term "alicyclic hydrocarbon group" means an assemblage of cyclic carbon atoms, which do not form an aromatic group, e.g. cyclohexane.

The term "substituted" as used in disclosing this present invention means that one or more of the carbon atoms and/or hydrogen atoms of one or more of carbon atoms in an aliphatic group, an aromatic group or an alicyclic hydrocarbon group, are replaced by another atom, e.g. a halogen atom, an oxygen atom, a nitrogen atom, a silicon atom, a sulphur atom, a phosphorous atom, selenium atom or a tellurium atom. Such substituents include hydroxyl groups, ether groups, carboxylic acid groups, ester groups, amide groups and amine groups.

The term "heteroaromatic group" means an aromatic group wherein at least one of the cyclic conjugated carbon atoms is replaced by a non-carbon atom such as a nitrogen atom, a sulphur atom, a phosphorous atom, selenium atom and a tellurium atom.

The term "heterocyclic group" means an alicyclic hydrocarbon group wherein at least one of the cyclic carbon atoms is replaced by an oxygen atom, a nitrogen atom, a phosphorous atom, a silicon atom, a sulphur atom, a selenium atom or a tellurium atom.

### Inkjet inks

The inkjet ink for preparing a lithographic printing plate contains at least one contrast dye according to the present invention, but a mixture of two, three or more contrast dyes may also be used.

The inkjet ink contains preferably water a liquid carrier for the contrast dye.

The inkjet ink may further contain at least one organic solvent. The inkjet ink may have a liquid carrier of organic solvent(s) but the liquid carrier is preferably aqueous for better control of dotsize on a printing plate.

The inkjet ink may further contain at least one oleophilizing compound.

The inkjet ink may further contain at least one pH adjuster.

The viscosity of the inkjet ink is preferably lower than 100 mPa.s, more preferably lower than 30 mPa.s, and most preferably lower than 15 mPa.s at a shear rate of 100 s⁻¹ and a temperature between 20 and 70°C.

The contrast dye is preferably used in the inkjet ink for preparing a lithographic printing plate in an amount of 0.1 to 20 wt%, more preferably 0.2 to 10 wt% and most preferably 0.5 to 5 wt% based on the weight of the inkjet ink.

### Contrast dyes

The contrast dye according to the present invention comprises at least one A, D and B group wherein
A represents a phosphorous containing group capable of reacting with the surface of a lithographic receiver;
D represents a chromophore group absorbing light between 400 and 700 nm; and
B represents an aliphatic group of at least 6 carbon atoms.

The contrast dye may be a low molecular weight compound containing preferably one or two A, D and B groups or may be a contrast dye having a polymeric backbone comprising a plurality of A, D and B groups.

In the case of a low molecular weight compound, the contrast dye may have the structure AₓD_{y}B_{z} wherein x, y and z are each independently chosen integers from 1 to 10 and the A and B groups are covalently bonded to the chromophore group D. In a preferred embodiment x and z are each independently chosen integers from 1 to 8 and y is 1 or 2. In another preferred embodiment X, Y and Z all represent the integer 1.

### A groups

In a preferred embodiment the phosphorous containing group capable of reacting with the surface of a lithographic receiver is represented by Formula (I): 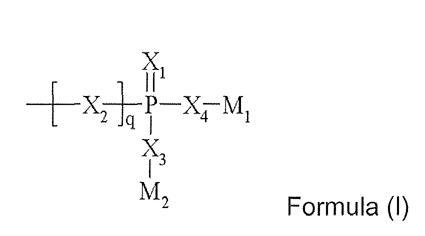 wherein
X₁, X₂, X₃ and X₄ are independently selected from oxygen or sulfur;
q represents 0 or 1;
M₁ is a proton or a counterion to compensate the negative charge of X₄;
M₂ is a proton or a counterion to compensate the negative charge of X₃ or represents a substituted or unsubstituted, saturated or unsaturated aliphatic chain, a substituted or unsubstituted aryl or hetero-aryl group.

Preferably the phosphorous containing group capable of reacting with the surface of a lithographic receiver represented by Formula (I) is selected from the group consisting of -O-PO₃H₂, -O-PO₃HR, -PO₃H₂ or -PO₃HR with R representing methyl or ethyl.

### B groups

The group B functions as an oleophilizing group. The group B represents an aliphatic group of at least 6 carbon atoms, more preferably at least 8 carbon atoms and most preferably at least 10 carbon atoms. In a preferred embodiment the carbon atoms form a straight chain aliphatic group of at least 6 carbon atoms, more preferably at least 8 carbon atoms and most preferably at least 10 carbon atoms.

The aliphatic group preferably contains one or more fluorine atoms, preferably the aliphatic group is a fluorinated straight chain aliphatic group containing at least 6 carbon atoms, more preferably at least 8 carbon atoms and most preferably at least 10 carbon atoms. In a preferred embodiment the aliphatic group B contains at least 5 fluorine atoms, more preferably at least 9 fluorine atoms and most preferably at least 13 fluorine atoms.

In a preferred embodiment the straight chain aliphatic group B may be represented by -(CH₂-CH₂)ₙCH₃ wherein n is an integer between 3 and 20, more preferably between 4 and 16, and most preferably between 5 and 14.

In another preferred embodiment the straight chain aliphatic group B may be represented by -(CF₂-CF₂)ₙCF₃ wherein n is an integer between 3 and 20, more preferably between 3 and 10.

### D groups

Any dye absorbing light between 400 and 700 nm may be used for the chromophore group D in the contrast dye. The dye may have a wavelength of maximum absorption λₘₐₓ located outside the wavelength region of 400 and 700 nm, for example at 320 nm or at 830 nm, as long as a sufficient portion of light is absorbed between 400 and 700 nm, such that it allows the human eye to differentiate printing areas from non-printing areas on the lithographic printing plate.

Suitable dyes may be selected from the group consisting of an azo dye with a molar extinction coefficient larger than 10³/ mol⁻¹ cm⁻¹, an anthraquinone dye, a (poly)methine dye, an azomethine dye, a disazo dye, a carbonium dye, a styryl dye, a stilbene dye, a phthalocyanine dye, a coumarin dye, an aryl-carbonium dye, a nitro dye, a naphtholactam dye, a dioxazine dye, a flavin dye and a formazan dye.

Suitable examples of low molecular weight contrast dyes according to the preferred embodiment of the present invention are given in Table 1, without being limited thereto.

**Table 1**

| | |
|---|---|
| CD-1 | 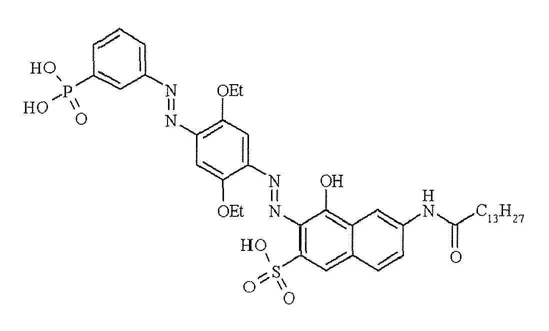 |
| CD-2 | 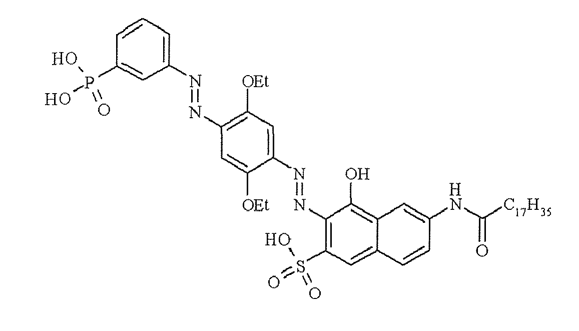 |
| CD-3 | 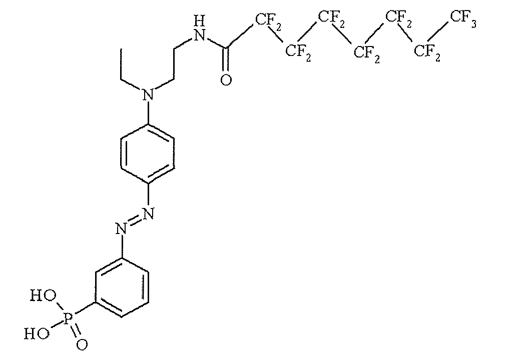 |
| CD-4 | 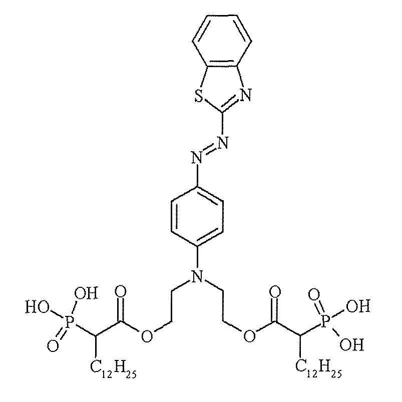 |
| CD-5 | 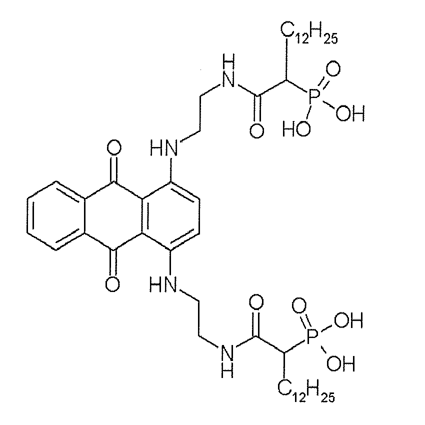 |
| CD-6 | 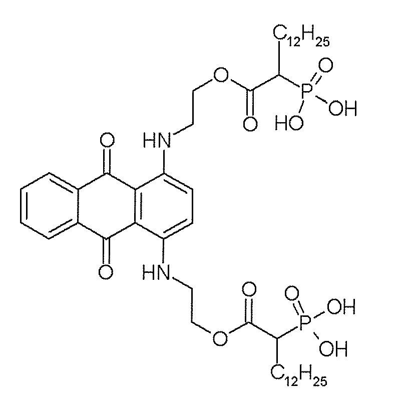 |
| CD-7 | 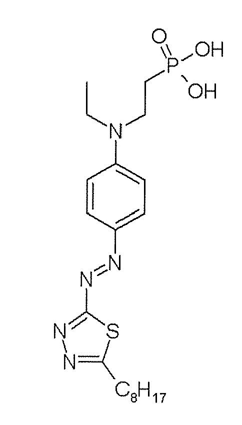 |
| CD-8 | 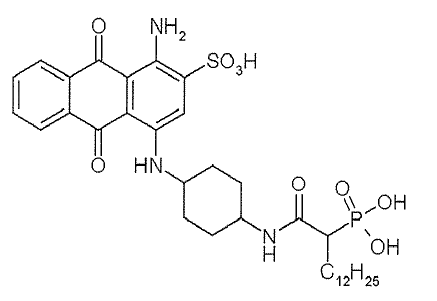 |
| CD-9 | 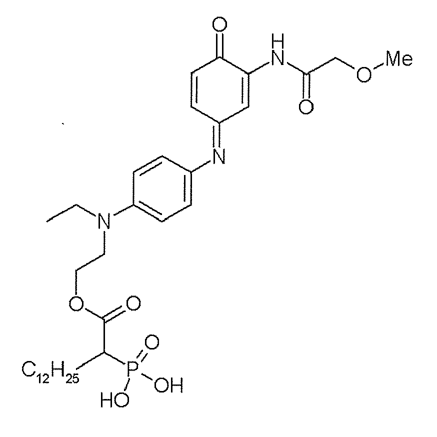 |
| CD-10 | 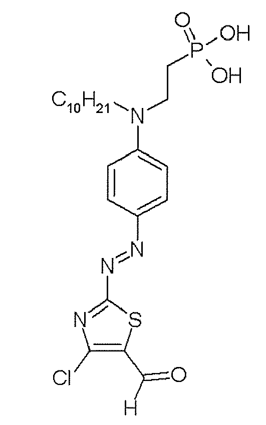 |
| CD-11 | 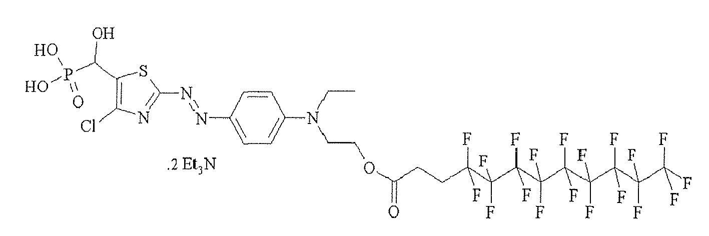 |
| CD-12 | 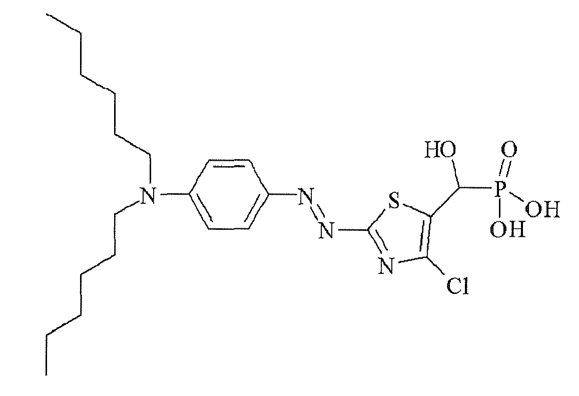 |
| CD-13 | 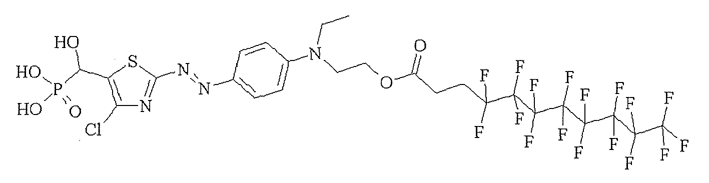 |
| CD-14 | 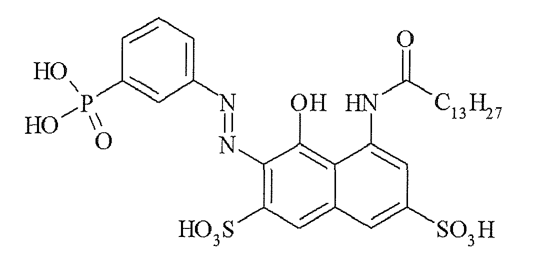 |
| CD-15 | 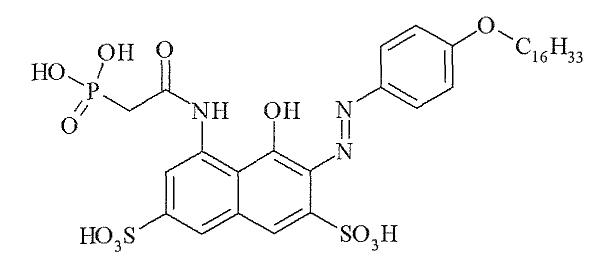 |
| CD-16 | 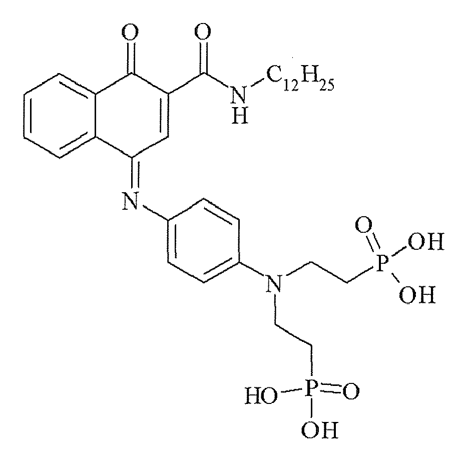 |
| CD-17 | 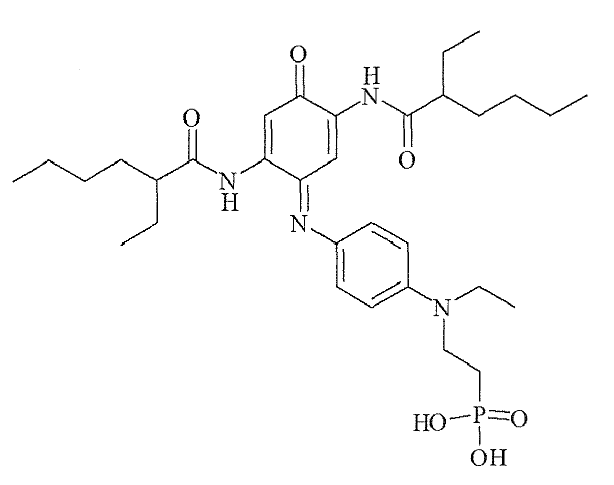 |
| CD-18 | 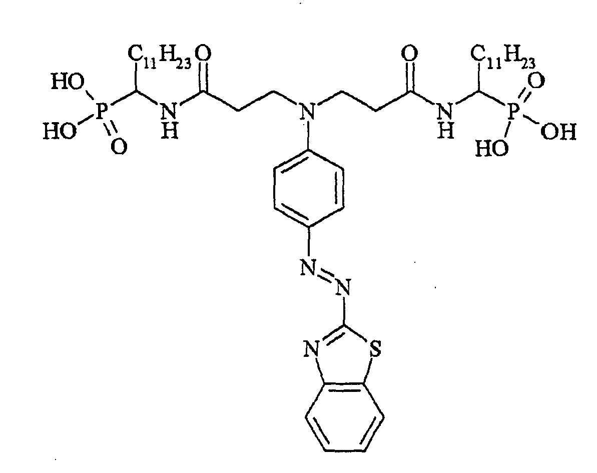 |
| CD-20 | 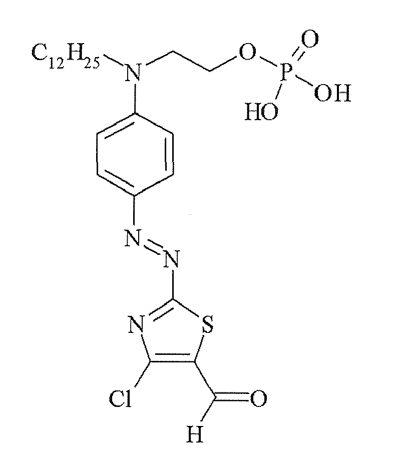 |
| CD-21 | 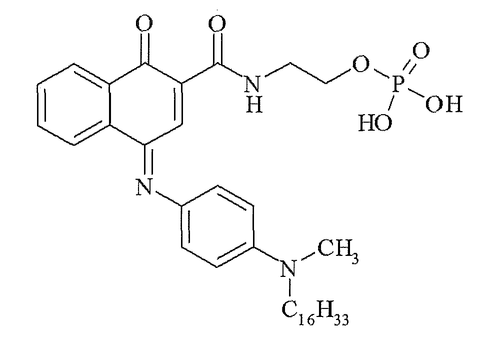 |
| CD-22 | 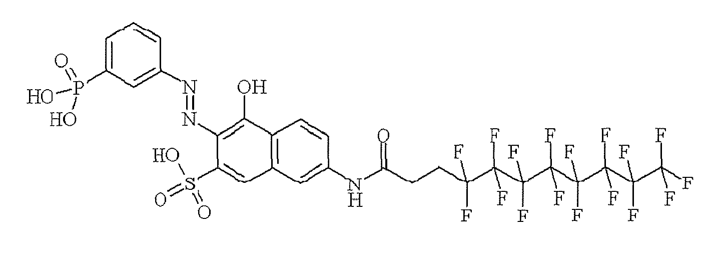 |

### Contrast dyes having a polymeric backbone

In another preferred embodiment a contrast dye having a polymeric backbone is used in the inkjet ink for preparing a lithographic printing plate according to the present invention wherein the A, D and B groups are either directly or indirectly covalently bonded to the polymeric backbone according to one or more structures selected from the group consisting of AₓD_{y}B_{z}, AₓD_{y}, AₓB_{z}, D_{y}B_{z}, A, D and B; and
wherein x and z are each independently chosen integers from 1 to 8 and y is 1 or 2.

Examples of contrast dyes having a polymeric backbone are given in Table 2, without being limited thereto.

**Table 2**

| | |
|---|---|
| CPOL-1 | 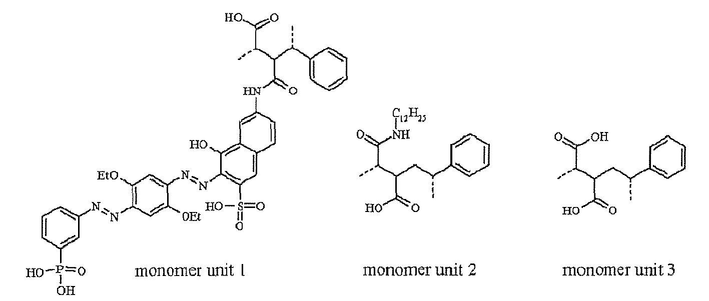 |
| CPOL-2 | 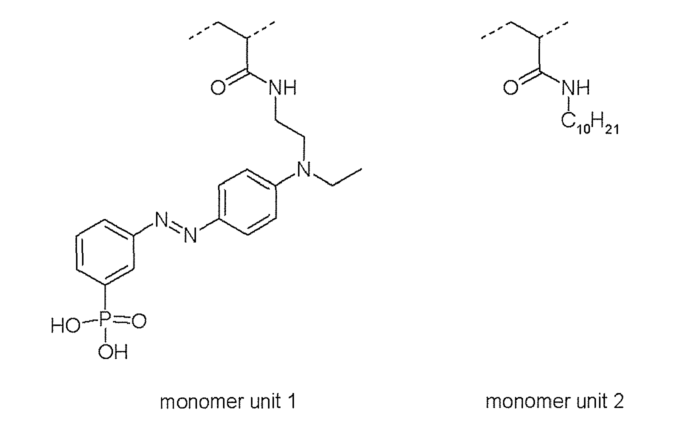 |
| CPOL-3 | 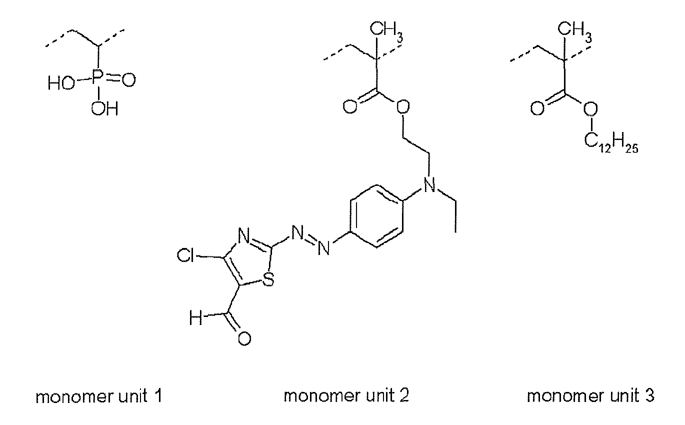 |
| CPOL-4 | 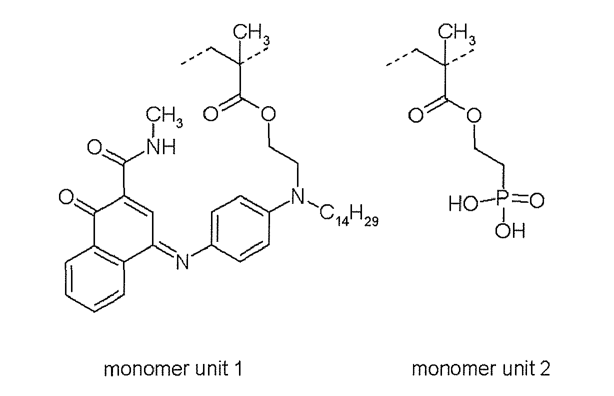 |
| CPOL-5 | 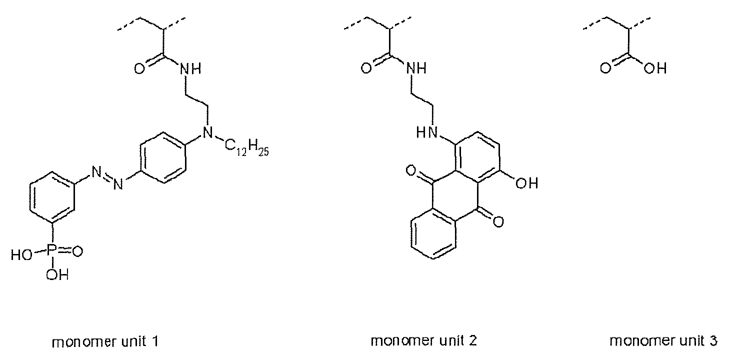 |
| CPOL-6 | 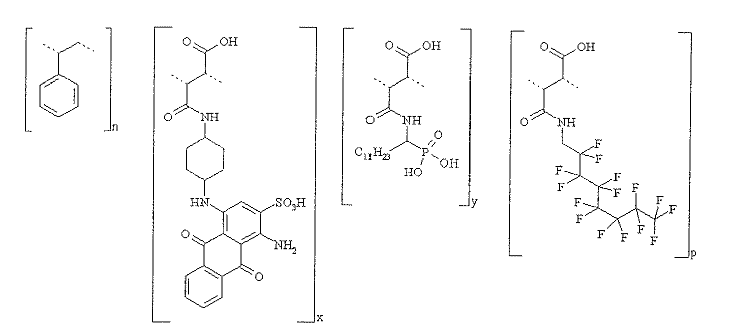 |
| CPOL-7 | 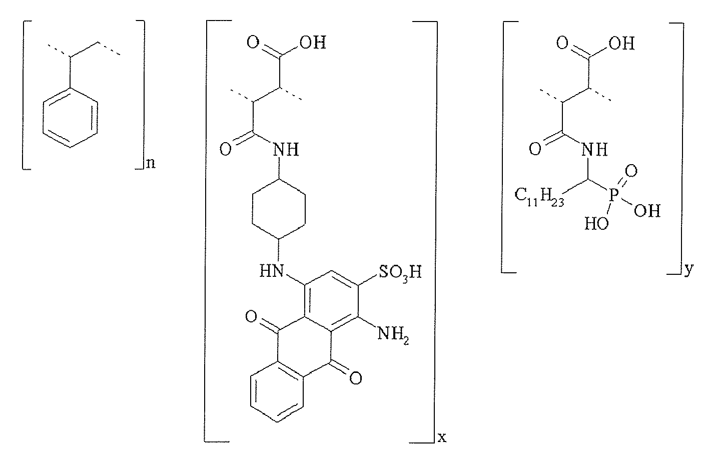 |
| CPOL-8 | 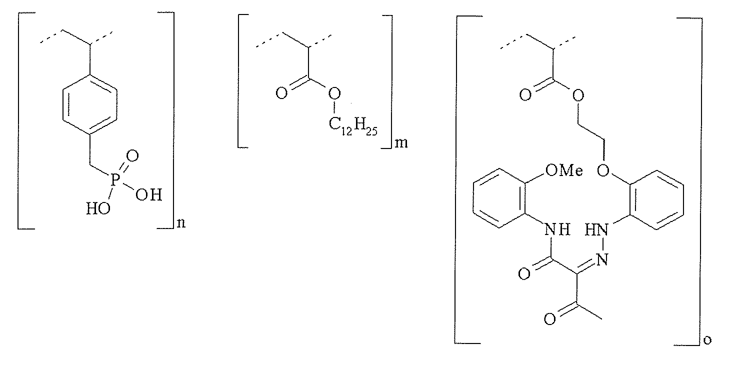 |
| CPOL-9 | 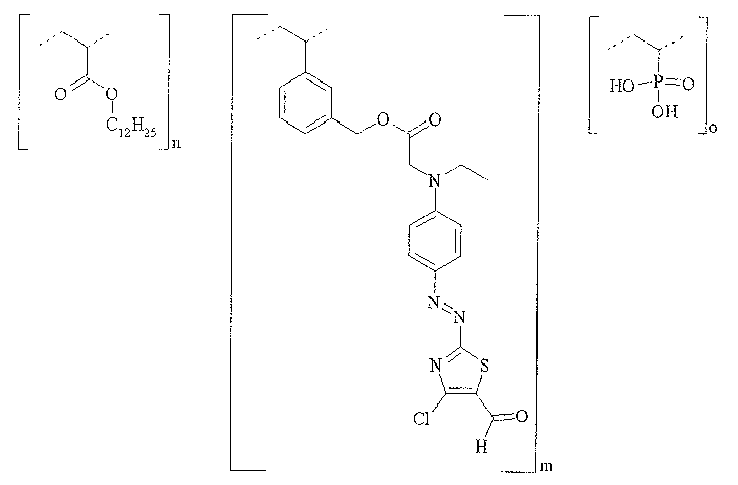 |
| CPOL-10 | 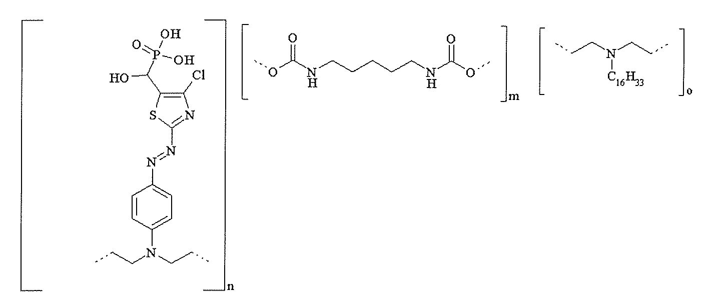 |

A preferred embodiment for the contrast dye having a polymeric backbone is exemplified by contrast dye CPOL-5: the chromophore group D is covalently bonded to the polymeric backbone and one or more A and B groups are covalently bonded to the chromophore group D.

Another preferred embodiment for the contrast dye having a polymeric backbone, exemplified by contrast dyes CPOL-1 and CPOL-2, is: the chromophore group D is covalently bonded to the polymeric backbone and one or more A groups are covalently bonded to the chromophore group D, while the B groups are directly covalently bonded to the polymeric backbone.

Another preferred embodiment for the contrast dye having a polymeric backbone, exemplified by contrast dye CPOL-4, is: the chromophore group D is covalently bonded to the polymeric backbone and one or more B groups are covalently bonded to the chromophore group D, while the A groups are covalently bonded to the polymeric backbone.

Another preferred embodiment for the contrast dye having a polymeric backbone, exemplified by contrast dye CPOL-3, is: the chromophore group D, the group A and group B are all separately covalently bonded to the polymeric backbone.

Suitable contrast dyes having a polymeric backbone may combine several different structures selected from the group consisting of AₓD_{y}B_{z}, AₓD_{y}, AₓB_{z}, D_{y}B_{z}, A, D and B, wherein x and z are each independently chosen integers from 1 to 8 and y is 1 or 2. For example the contrast dye CPOL-6 has a polymeric backbone substituted with x D groups, y A₁B₁ groups and p A groups.

A contrast dye having a polymeric backbone is preferably used in the inkjet ink for preparing a lithographic printing plate according to the present invention in an amount of 1 to 10 wt%, preferably 2 to 6 wt% based on the weight of the inkjet ink.

### Polymeric backbones

The polymeric backbone of the contrast dye according to the present invention contains monomers with the group AₓD_{y}B_{z}, AₓD_{y}, AₓB_{z}, D_{y}B_{z}, A, D and/or B attached to it and optionally other monomers. The groups AₓD_{y}B_{z}, AₓD_{y}, AₓB_{z}, D_{y}B_{z}, A, D and/or B may be linked to the monomer by any linking group. Preferably the linking group contains at least one carbon atom, one nitrogen atom, one oxygen atom, one phosphorous atom, one silicon atom, one sulphur atom, one selenium atom or one tellurium atom.

The linking group may be the result of modification of a monomer with the group AₓD_{y}B_{z}, AₓD_{y}, AₓB_{z}, D_{y}B_{z}, A, D or B having a reactive group. Suitable reactive groups include thiol groups, primary or secondary amino groups, carboxylic acid groups or salts thereof, hydroxyl groups, isocyanate groups and epoxy groups. Typical covalent bonds formed by reaction include an amide, an ester, a urethane, an ether and a thioether.

The contrast dye having a polymeric backbone may have a polymer composition obtained by randomly polymerizing monomers, alternating polymerizing monomers, gradient (tapered) polymerizing monomers, polymerizing as block copolymers or graft copolymers and also mixed forms, e.g. blocky gradient copolymers.

The polymeric backbone can have different polymer architectures including linear, comb/branched, star, dendritic (including dendrimers and hyperbranched polymers) polymer architectures.

Comb/branched polymers have side branches of linked monomer molecules protruding from various central branch points along the main polymer chain (at least 3 branch points).

Star polymers are branched polymers in which three or more either similar or different linear homopolymers or copolymers are linked together to a single core.

Dendritic polymers comprise the classes of dendrimers and hyperbranched polymers; in dendrimers with well-defined mono-disperse structures all branch points are used (multi-step synthesis), while hyperbranched polymers means polymers having a plurality of branch points and multifunctional branches that lead to further branching with polymer growth (one-step polymerisation process).

A general review on the architecture of polymers is given by ODIAN, George, Principles Of Polymerization, 4th edition, Wiley-Interscience, 2004, p. 1-19.

Monomers lacking the group AₓD_{y}B_{z}, AₓD_{y}, AₓB_{z}, D_{y}B_{z}, A, D or B may be included in the polymeric backbone for various purposes. Sometimes it is necessary to include a number of monomers to improve the solubility in the inkjet ink or to lower its viscosity. In other cases specific monomers are included to further enhance the chemical resistance of the printing plate during the printing process when gum solutions and other solutions containing aggressive organic solvents are used.

The polymeric backbone consists preferably of no more than 2, 3 or 4 monomer species.

The monomers lacking the group AₓD_{y}B_{z}, AₓD_{y}, AₓB_{z}, D_{y}B_{z}, A, D or B used to prepare the contrast dye can be any monomer and/or oligomer found in the Polymer Handbook, Vol. 1 + 2. 4th edition. Edited by J. BRANDRUP, et al. Wiley-Interscience , 1999.

Suitable examples of monomers include: acrylic acid, methacrylic acid, maleic acid, acryloyloxybenzoic acid and methacryloyloxybenzoic acid (or their salts), maleic anhydride; alkyl(meth)acrylates (linear, branched and cycloalkyl) such as methyl(meth)acrylate, n-butyl(meth)acrylate, tert-butyl(meth)acrylate, cyclohexyl(meth)acrylate and 2-ethylhexyl(meth)acrylate; aryl(meth)acrylates such as benzyl(meth)acrylate and phenyl(meth)acrylate; hydroxyalkyl(meth)acrylates such as hydroxyethyl(meth)acrylate and hydroxypropyl(meth)acrylate; (meth)acrylates with other types of functionalities (e.g. oxirane, amino, fluoro, polyethylene oxide, phosphate-substituted) such as glycidyl (meth)acrylate, dimethylaminoethyl(meth)acrylate, trifluoroethyl acrylate, methoxypolyethyleneglycol (meth)acrylate and tripropyleneglycol(meth)acrylate phosphate; allyl derivatives such as allyl glycidyl ether; styrenics such as styrene, 4-methylstyrene, 4-hydroxystyrene, and 4-acetoxystyrene; (meth)acrylonitrile; (meth)acrylamides (including N-mono and N,N-disubstituted) such as N-benzyl (meth)acrylamide; maleimides such as N-phenyl maleimide, N-benzyl maleimide and N-ethyl maleimide; vinyl derivatives such as vinylcaprolactam, vinylpyrrolidone, vinylimidazole, vinylnaphthalene and vinyl halides; vinylethers such as vinylmethyl ether; and vinylesters of carboxylic acids such as vinylacetate and vinylbutyrate.

Specific monomers to further enhance the chemical resistance of the printing plate during the printing process include a monomer represented by the general formula: 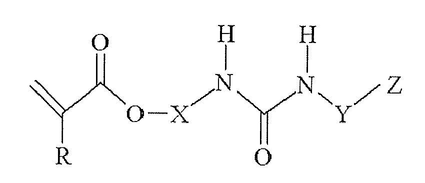 in which R is -H or -CH₃; X is a bivalent linking group; Y is a substituted or unsubstituted bivalent aromatic group; and Z is -OH, -COOH, or -SO₂NH₂. R is preferably CH₃. Preferably X is a substituted or unsubstituted alkylene group, substituted or unsubstituted phenylene [C₆H₄] group, or substituted or unsubstituted naphthalene [C₁₀H₆] group; such as -(CH2)ₙ -, in which n is 2 to 8; 1,2-, 1,3-, and 1,4-phenylene; and 1,4-, 2,7-, and 1,8-naphthalene. More preferably X is unsubstituted and even more preferably n is 2 or 3; most preferably X is -(CH₂CH₂)-. Preferably Y is a substituted or unsubstituted phenylene group or substituted or unsubstituted naphthalene group; such as 1,2-, 1,3-, and 1,4-phenylene; and 1,4-, 2,7-, and 1,8-naphthalene. More preferably Y is unsubstituted, most preferably unsubstituted 1,4-phenylene. Z is -OH, -COOH, or -SO2 NH2, preferably -OH.

A preferred monomer is: 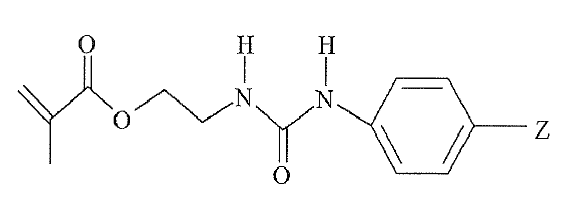 in which Z is -OH, -COOH, or -SO₂NH₂, preferably -OH.

Other suitable monomers to further enhance the chemical resistance of the printing plate during the printing process include a monomer represented by the general formula: 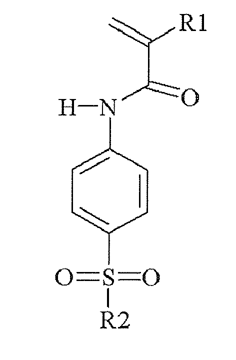 in which R1 is -H or -CH₃ ; R2 is -NH-R3 or -NCH₃-R3; R3 is a substituted or unsubstituted, saturated or unsaturated alkyl, a substituted or unsubstituted aryl or hetero-aryl group. Preferably R1 is -CH₃. More preferably R2 is selected from the group consisting of -NH₂,

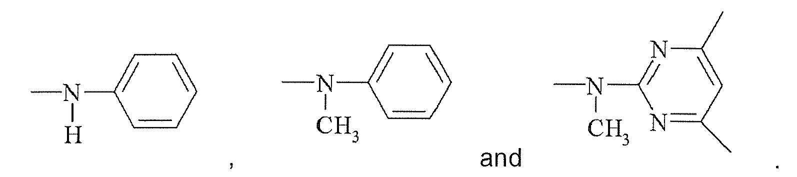

Other suitable monomers to further enhance the chemical resistance of the 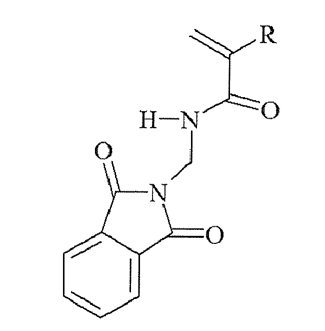 printing plate during the printing process include 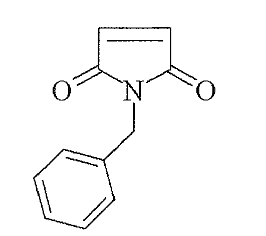 and
in which R is -H or -CH₃. Preferably R is -CH₃.

The contrast dye having a polymeric backbone according to the present invention preferably has a polymeric backbone with a polymerization degree DP between 5 and 1000, more preferably between 10 and 500 and most preferably between 10 and 100.

The contrast dye having a polymeric backbone according to the present invention preferably has a number average molecular weight Mn between 500 and 30,000, more preferably between 1,500 and 10,000.

### Oleophilizing compounds

An oleophilizing compound or hydrophobizing compound may be added to the inkjet ink, to form in combination with the contrast dye the printing areas of the lithographic image. The oleophilizing compound on its own is not capable of delivering a good contrast between the printing and the non-printing areas of the lithographic image.

The hydrophobizing compound is preferably selected from the group consisting of a phosphate or salt thereof, a phosphonate or salt thereof, a boronic acid derivative, a 1,3-dicarbonyl compound, an imidazoline derivative and a catechol or pyrogallol derivative. Phosphates and phosphonates are particularly preferred.

Suitable hydrophobizing compounds may be selected from those disclosed in EP 1157825 A (AGFA) , EP 1157826 A (AGFA) , EP 1157827 A (AGFA), EP 1157828 A (AGFA), EP 1211063 A (AGFA), EP 1219415 A (AGFA), US 6532871 (KPG) and EP 0882584 A (KODAK).

In a preferred embodiment, the inkjet ink contains a fluorosurfactant as an oleophilizing compound.

Illustrative examples of fluorosurfactants useful as oleophilizing compound are FLUORAD^{™} surfactants and ZONYL^{™} surfactants. FLUORAD surfactants are commercially available from 3M Company and have a narrow distribution of the hydrophobic chain length. ZONYL^{™} surfactants are commercially available from E. I. du Pont de Nemours & Co. and have a distribution of perfluoroalkyl chain length. Suitable ZONYL^{™} surfactants include ZONYL^{™} FSA, ZONYL^{™} FSP, ZONYL^{™} FSE and ZONYLTM FSN.

Particularly preferred fluorosurfactants are selected from the group consisting of (F(CF₂CF₂)₃₋₈CH₂CH₂O)_{1,2}P(O)(ONH₄)_{2,1}.

### Organic solvents

The inkjet ink may further contain at least one organic solvent, for example, to dissolve the contrast dye better. The organic solvent is preferably added to the inkjet ink in an amount of 1 to 40 wt%, more preferably 2 to 20 wt%, and most preferably 5 to 10 wt% each based on the total weight of the inkjet ink.

Suitable organic solvents include alcohols, aromatic hydrocarbons, ketones, esters, aliphatic hydrocarbons, higher fatty acids, carbitols, cellosolves, higher fatty acid esters. Suitable alcohols include, methanol, ethanol, propanol and 1-butanol, 1-pentanol, 2-butanol, t.-butanol. Suitable aromatic hydrocarbons include toluene, and xylene. Suitable ketones include methyl ethyl ketone, methyl isobutyl ketone, 2,4-pentanedione and hexafluoroacetone. Also glycol, glycolethers, N-methylpyrrolidone, 2-pyrrolidone, N,N-dimethylacetamid, N, N-dimethylformamid may be used.

An organic solvent can also be present in the inkjet ink as a humectant to prevent the clogging of the nozzle, due to its ability to slow down the evaporation rate of ink.

Suitable humectants include triacetin, N-methyl-2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols; glycols, including propylene glycol, polypropylene glycol, ethylene glycol, polyethylene glycol, diethylene glycol, tetraethylene glycol, and mixtures and derivatives thereof. Preferred humectants are ethylene glycol, propylene glycol, diethylene glycol, dipropylene glycol, triethylene glycol mono methyl ether, triethylene glycol mono butylether, glycerol and 1,2-hexanediol. The humectant is preferably added to the inkjet ink in an amount of 0.1 to 40 wt%, more preferably 2 to 35 wt%, and most preferably approximately 10 to 30 wt% each based on the total weight of the inkjet ink. The total amount of organic solvent and humectant in the inkjet ink is preferably in the range of 5 to 40 wt%, more preferably 15 to 30 wt% each based on the total weight of the inkjet ink. pH control agents

A pH control agent may also be present in the inkjet ink. The inkjet ink has preferably a pH from 3 to 8, more preferably from 4 to 6. The pH of the inkjet ink is usually adjusted with an acid or a base such as a mineral acid, an organic acid, an organic base or an inorganic salt.

Examples of the mineral acids include nitric acid, sulfuric acid, phosphoric acid and metaphosphoric acid. Especially organic acids are used as pH control agents and as desensitizing agents. Examples of the organic acids include carboxylic acids, sulfonic acids, phosphonic acids or salts thereof, e.g. succinates, phosphates, phosphonates, sulfates and sulfonates. Specific examples of the organic acid include citric acid, acetic acid, oxalic acid, malonic acid, p-toluenesulfonic acid, tartaric acid, malic acid, lactic acid, levulinic acid, phytic acid and organic phosphonic acid.

Examples of inorganic bases are hydroxides of alkali or rare earth metals, ammonium hydroxide, hydroxylamine. Suitable examples of organic bases are amines as e.g. triethanolamine, triethylamine, tributylamine, dimethylethanolamine, diisopropylamin and heterocyclic compounds such as pyrazine.

Examples of the inorganic salt include magnesium nitrate, monobasic sodium phosphate, dibasic sodium phosphate, nickel sulfate, sodium hexametaphosphate and sodium tripolyphosphate. Other inorganic salts can be used as corrosion inhibiting agents, e.g. magnesium sulfate or zinc nitrate.

The mineral acid, organic acid or inorganic salt may be used singly or in combination with one or more thereof. Lithographic printing plates

The lithographic printing plate contains a contrast dye comprising A, D and B groups wherein
A represents a phosphorous containing group capable of reacting with the surface of a lithographic receiver;
D represents a chromophore group absorbing light between 400 and 700 nm; and
B represents an aliphatic group of at least 6 carbon atoms. The lithographic printing plate can be obtained by a method for direct plate making by jetting on a printing plate precursor an inkjet ink comprising a contrast dye according to the present invention.

The lithographic printing plate may be a sheet-like material such as a plate or it may be a cylindrical element such as a sleeve which can be slid around a print cylinder of a printing press.

In a preferred embodiment a gum solution is jetted on at least the lithographic non-image, but preferably the gum solution is jetted only on the non-printing areas of the lithographic printing plate.

### Lithographic supports

A particularly preferred lithographic support is an electrochemically grained and anodized aluminum support. Graining an anodizing of aluminum supports is well known. The acid used for graining can be e.g. nitric acid or sulfuric acid. The acid used for graining preferably comprises hydrogen chloride. Also mixtures of e.g. hydrogen chloride and acetic acid can be used. The relation between electrochemical graining and anodizing parameters such as electrode voltage, nature and concentration of the acid electrolyte or power consumption on the one hand and the obtained lithographic quality in terms of Ra and anodic weight (g/m² of Al₂O₃ formed on the aluminum surface) on the other hand is well known. More details about the relation between various production parameters and Ra or anodic weight can be found in e.g. the article "Management of Change in the Aluminium Printing Industry" by F. R. Mayers, published in the ATB Metallurgie Journal, volume 42 nr. 1-2 (2002) pag. 69.

With regard to the anodizing treatment, methods that have been conventionally used in this field can be used. Specifically, when direct or alternative current is fed to the aluminum plates in aqueous solution or non aqueous solution, alone or in combination , of sulfuric acid, phosphoric acid, chromic acid, oxalic acid, sulfamic acid, benzenesulfonic acid and the like, an anodized layer can be formed on the surface of the aluminum plate. Since conditions for anodizing treatment change variously depending on the electrolyte being used, those are not decided unconditionally, but it is generally appropriate that the concentration of electrolyte is 1 to 80 wt%, temperature of solution is 8 to 70°C, preferably 25 to 55°C, current density is 0.5 to 70 A/dm², preferably 15 to 60 A/dm², voltage is 1 to 200 V, and time for electrolysis is 1 to 100 seconds, preferably 5 to 60 seconds.

The anodized aluminum support may be subject to a so-called post-anodic treatment to improve the hydrophilic properties of its surface. For example, the aluminum support may be silicated by treating its surface with a sodium silicate solution at elevated temperature, e.g. 95°C. Alternatively, a phosphate treatment may be applied which involves treating the aluminum oxide surface with a phosphate solution that may further contain an inorganic fluoride. Further, the aluminum oxide surface may be rinsed with a citric acid or citrate solution. This treatment may be carried out at room temperature or may be carried out at a slightly elevated temperature of about 30 to 50°C. A further interesting treatment involves rinsing the aluminum oxide surface with a bicarbonate solution. Still further, the aluminum oxide surface may be treated with polyvinylphosphonic acid, polyvinylmethylphosphonic acid, phosphoric acid esters of polyvinyl alcohol, polyvinylsulfonic acid, polyvinylbenzenesulfonic acid, sulfuric acid esters of polyvinyl alcohol, and acetals of polyvinyl alcohols formed by reaction with a sulfonated aliphatic aldehyde.

Another useful post-anodic treatment may be carried out with a solution of polyacrylic acid or a polymer comprising at least 30 mol% of acrylic acid monomeric units, e.g. GLASCOL E15, a polyacrylic acid, commercially available from ALLIED COLLOIDS.

The grained and anodized aluminum support may be a sheet-like material such as a plate or it may be a cylindrical element such as a sleeve which can be slid around a print cylinder of a printing press.

The support can also be a flexible support, which may be provided with a hydrophilic layer, hereinafter called 'base layer'. The flexible support is e.g. paper, plastic film or aluminum. Preferred examples of plastic film are polyethylene terephthalate film, polyethylene naphthalate film, cellulose acetate film, polystyrene film, polycarbonate film, etc. The plastic film support may be opaque or transparent.

The base layer is preferably a cross-linked hydrophilic layer obtained from a hydrophilic binder cross-linked with a hardening agent such as formaldehyde, glyoxal, polyisocyanate or a hydrolyzed tetra-alkylorthosilicate. The latter is particularly preferred. The thickness of the hydrophilic base layer may vary in the range of 0.2 to 25 µm and is preferably 1 to 10 µm. More details of preferred embodiments of the base layer can be found in e.g. EP 1025992 A (AGFA).

### Inkjet printing process

In ink jet printing tiny drops of ink fluid are projected directly onto an ink receptor surface without physical contact between the printing device and the receptor. The printing device stores the printing data electronically and controls a mechanism for ejecting the drops image-wise. Printing may be accomplished by moving the print head across the lithographic receiver or vice versa. The inkjet printing may also be a "single pass printing process". This is a printing mode, which can be performed by using page wide inkjet printing heads or multiple staggered inkjet printing heads that cover the entire width of the ink-receiver surface. In a single pass printing process the inkjet printing heads usually remain stationary and the ink-receiver surface is transported under the inkjet printing heads. An example of such a single pass inkjet printer is "The Dot Factory" manufactured by AGFA DOTRIX.

The jetting of the ink droplets can be performed in several different ways. In a first type of process a continuous droplet stream is created by applying a pressure wave pattern. This process is known as continuous ink jet printing. In a first embodiment the droplet stream is divided into droplets that are electrostatically charged, deflected and recollected, and into droplets that remain uncharged, continue their way undeflected, and form the image. Alternatively, the charged deflected stream forms the image and the uncharged undeflected jet is recollected. In this variant of continuous ink jet printing several jets are deflected to a different degree and thus record the image (multideflection system).

According to a second process the ink droplets can be created "on demand " ("DOD" or "drop on demand" method) whereby the printing device ejects the droplets only when they are used in imaging on a receiver thereby avoiding the complexity of drop charging, deflection hardware, and ink recollection. In drop-on-demand the ink droplet can be formed by means of a pressure wave created by a mechanical motion of a piezoelectric transducer (so-called "piezo method"), or by means of discrete thermal pushes (so-called "bubble jet" method, or "thermal jet" method).

In a preferred embodiment of the method for direct plate making, the inkjet printer is mounted on the printing press. For coloured printing matter, the printing press usually comprises four print cylinders. A plate is mounted on each print cylinder for each of the four printing inks (CMYK); in this case each print cylinder may have its own inkjet printer.

In another preferred embodiment, the hue of the jetted printing areas on the printing plate precursor corresponds with the hue of the printing ink to be used with the printing plate. For example for a CMYK printing process, the printing plate having the lithographic image for printing with the cyan printing ink has a cyan hue, the printing plate having the lithographic image for printing with the magenta printing ink has a magenta hue, the printing plate having the lithographic image for printing with the yellow printing ink has a yellow hue, and the printing plate having the lithographic image for printing with the black printing ink has a dark hue. The advantage of this method is that errors in mounting a printing plate on the wrong printing press are eliminated and that no extra markings on the printing plate are required for identifying the colour selection with which the printing plate corresponds.

In another embodiment of the method for direct plate making, a gum solution is jetted on the lithographic non-image, i.e. the non-printing areas of the lithographic image. In this case the inkjet printer has at least one print head ejecting small droplets of gum solution in a controlled manner through nozzles onto the surface of a lithographic printing plate, which is moving relative to the printing head(s). The jetted gum solution forms a hydrophilic protective layer on the non-printing areas and optionally the printing areas of the lithographic printing plate. Preferably the gum solution for the non-printing areas is jetted in the same printing process with the inkjet ink used to form the printing areas of a lithographic image on a lithographic printing plate. According to another embodiment, the gum solution for the non-printing areas and the inkjet ink used to form the printing areas of lithographic image on the lithographic printing plate are jetted by the same inkjet print head.

### Gum solutions

The gum solution suitable for use in a method for direct plate making is an aqueous liquid, which comprises one or more surface protective compounds that are capable of protecting the lithographic image of a printing plate against contamination or damaging. Suitable examples of such compounds are film-forming hydrophilic polymers and surfactants. The hydrophilic protective layer that remains on the plate after treatment with the gum solution preferably comprises between 0.1 and 20 g/m² of the surface protective compound, particularly preferably between 0.15 and 0.3 g/m² of the surface protective compound.

For jetting with an inkjet printer, the viscosity of the gum solution is preferably lower than 100 mPa.s, more preferably lower than 50 mPa.s, and most preferably lower than 30 mPa.s at a shear rate of 100 s⁻¹ and a temperature between 20 and 110°C.

A special type of gum solution is a baking gum solution, having a similar composition as a standard gum solution, but with the additional preference towards compounds that do not evaporate at the usual bake temperatures.

Specific examples of suitable baking gum solutions are described in e.g. US 4983478 (HOECHST), EP 1025992 A (AGFA), GB 1555233 (HOECHST) and US 4786581 (HOECHST).

After applying the baking gum solution, the plate can be dried before baking or is dried during the baking process itself. The baking process can proceed at a temperature between 100°C and 230°C for a period of 5 to 40 minutes. For example, a lithographic printing plate jetted upon with a baking gum can be baked at a temperature of 230°C for 5 minutes, at a temperature of 150°C for 10 minutes or at a temperature of 120°C for 30 minutes. Baking can be done in conventional hot air ovens or by irradiation with lamps emitting in the infrared or ultraviolet spectrum.

### Hydrophilic polymers

The hydrophilic polymers suitable as surface protective compounds in the gum solution are polymers comprising ionic or ionisable groups or containing polyethyleneoxide groups.

Examples of ionic or ionizable groups are acid groups or salts thereof such as carboxylic acid group, sulphonic acid, phosphoric acid or phosphonic acid. The acid groups in the polymer may be neutralized with an organic amine (e.g. ammonia, triethylamine, tributylamine, dimethylethanolamine, diisopropanolamine, morpholine, diethanolamine or triethanolamine) or an alkali metal (e.g. lithium, sodium or potassium). The polymer may be composed of a monomer comprising an anionic group. The polymer may also be composed of two or more different types of monomers comprising anionic and/or non-ionic groups. Specific examples of monomers comprising anionic groups are (meth)acrylic acid, crotonic acid, (meth)acrylic acid, propyl(meth)acrylic acid, isopropyl(meth)acrylic acid, itaconic acid, fumaric acid, sulfoethyl(meth)acrylate, butyl(meth)acrylamidesulfonic acid and phosphoethyl(meth)acrylate. In general, the number average molecular weight of the polymer is preferably in the range of about 1,000 to 3,000,000 g/mol.

Preferred polymers for use as protective compound in the gum solution are gum arabic, pullulan, cellulose derivatives such as carboxymethylcellulose, carboxyethylcellulose or methylcellulose, (cyclo)dextrin, poly(vinyl alcohol), poly(vinyl pyrrolidone), polysaccharide, homo- and copolymers of acrylic acid, methacrylic acid or acrylamide, a copolymer of vinyl methyl ether and maleic anhydride, a copolymer of vinyl acetate and maleic anhydride or a copolymer of styrene and maleic anhydride. Highly preferred polymers are homo- or copolymers of monomers containing carboxylic, sulfonic or phosphonic groups or the salts thereof, e.g. (meth)acrylic acid, styrene sulfonic acid, vinyl sulfonic acid, vinyl phosphonic acid or acrylamidopropane sulfonic acid.

### Surfactants

The gum solution may include one or more surfactants to improve the surface properties of the jetted hydrophilic protective layer. The surfactant may be an anionic or a non-ionic surfactant.

Examples of anionic surfactants include aliphates, abietates, hydroxyalkanesulfonates, alkanesulfonates, dialkylsulfosuccinates, straight-chain alkylbenzenesulfonates, branched alkylbenzenesulfonates, alkylnaphthalenesulfonates, alkylphenoxypolyoxyethylenepropylsulfonates, salts of polyoxyethylene alkylsulfophenyl ethers, sodium N-methyl-N-oleyltaurates, monoamide disodium N-alkylsulfosuccinates, petroleum sulfonates, sulfated castor oil, sulfated tallow oil, salts of sulfuric esters of aliphatic alkylesters, salts of alkylsulfuric esters, sulfuric esters of polyoxyethylenealkylethers, salts of sulfuric esters of aliphatic monoglycerides, salts of sulfuric esters of polyoxyethylenealkylphenylethers, salts of sulfuric esters of polyoxyethylenestyrylphenylethers, salts of alkylphosphoric esters, salts of phosphoric esters of polyox-yethylenealkylethers, salts of phosphoric esters of polyoxyethylenealkylphenylethers, partially saponified compounds of styrenemaleic anhydride copolymers, partially saponified compounds of olefin-maleic anhydride copolymers, and naphthalenesulfonateformalin condensates. Particularly preferred among these anionic surfactants are dialkylsulfosuccinates, salts of alkylsulfuric esters and alkylnaphthalenesulfonates.

Specific examples of suitable anionic surfactants include sodium dodecylphenoxybenzene disulfonate, the sodium salt of alkylated naphthalenesulfonate, disodium methylene-dinaphtalene-disulfonate, sodium dodecyl-benzenesulfonate, sulfonated alkyl-diphenyloxide, ammonium or potassium perfluoroalkylsulfonate and sodium dioctyl-sulfosuccinate.

Suitable examples of the non-ionic surfactants include polyoxyethylene alkyl ethers, polyoxyethylene alkyl phenyl ethers, polyoxyethylene polystyryl phenyl ethers, polyoxyethylene polyoxypropylene alkyl ethers, polyoxyethylene polyoxypropylene block polymers, partial esters of glycerinaliphatic acids, partial esters of sorbitanaliphatic acid, partial esters of pentaerythritolaliphatic acid, propyleneglycolmonoaliphatic esters, partial esters of sucrosealiphatic acids, partial esters of polyoxyethylenesorbitanaliphatic acid, partial esters of polyoxyethylenesorbitolaliphatic acids, polyethyleneglycolaliphatic esters, partial esters of poly-glycerinaliphatic acids, polyoxyethylenated castor oils, partial esters of polyoxyethyleneglycerinaliphatic acids, aliphatic diethanolamides, N,N-bis-2-hydroxyalkylamines, polyoxyethylene alkylamines, triethanolaminealiphatic esters, and trialkylamine oxides. Particularly preferred among these non-ionic surfactants are polyoxyethylene alkylphenyl ethers and poloxyethylene-polyoxypropylene block polymers.

Two or more of the above surfactants may be used in combination. For example, a combination of two or more different anionic surfactants or a combination of an anionic surfactant and a non-ionic surfactant may be preferred. The amount of such a surfactant is not specifically limited but is preferably from 0.01 to 20 wt%.

The surface tension of the gum solution is preferably from 20 to 50 mN/m, more preferably from 25 to 35 mN/m. pH control agents

A pH control agent may also be present in the gum solution. The pH of the gum solution is usually adjusted with an acid or a base such as a mineral acid, an organic acid , an organic base or an inorganic salt.

Examples of the mineral acids include nitric acid, sulfuric acid, phosphoric acid and metaphosphoric acid. Especially organic acids are used as pH control agents and as desensitizing agents. Examples of the organic acids include carboxylic acids, sulfonic acids, phosphonic acids or salts thereof, e.g. succinates, phosphates, phosphonates, sulfates and sulfonates. Specific examples of the organic acid include citric acid, acetic acid, oxalic acid, malonic acid, p-toluenesulfonic acid, tartaric acid, malic acid, lactic acid, levulinic acid, phytic acid and organic phosphonic acid.

Examples of inorganic bases are hydroxides of alkali or rare earth metals, ammonium hydroxide, hydroxylamine. Suitable examples of organic bases are amines as e.g. triethanolamine, triethylamine, tributylamine, dimethylethanolamine, diisopropylamin and heterocyclic compounds such as pyrazine.

Examples of the inorganic salt include magnesium nitrate, monobasic sodium phosphate, dibasic sodium phosphate, nickel sulfate, sodium hexametaphosphate and sodium tripolyphosphate. Other inorganic salts can be used as corrosion inhibiting agents, e.g. magnesium sulfate or zinc nitrate.

The mineral acid, organic acid or inorganic salt may be used singly or in combination with one or more thereof.

### Wetting agents

A wetting agent may also be present in the gum solution. Examples of the wetting agent include ethylene glycol, propylene glycol, triethylene glycol, butylene glycol, hexylene glycol, diethylene glycol, dipropylene glycol, glycerin, trimethylol propane and diglycerin.

The wetting agent may be used singly or in combination with one or more thereof.

In general, the foregoing wetting agent is preferably used in an amount of from 0.1 to 25 wt%.

### Chelate compounds

A chelate compound may also be present in the gum solution. Calcium ion and other impurities contained in the gum solution can have adverse effects on printing and thus cause the contamination of printed matter. Adding a chelate compound to the gum solution can eliminate this problem.

Preferred examples of such a chelate compound include organic phosphonic acids or phosphonoalkanetricarboxylic acids. Specific examples are potassium or sodium salts of ethylenediaminetetraacetic acid, diethylenetriaminepentaacetic acid, triethylenetetraminehexaacetic acid, hydroxyethylethylenediaminetriacetic acid, nitrilotriacetic acid, 1-hydroxyethane-1,1-diphosphonic acid and aminotri(methylenephosphonic acid). Besides these sodium or potassium salts of these chelating agents, organic amine salts are useful.

The preferred amount of such a chelating agent to be added is from 0.001 to 1.0 wt% relative to the gum solution.

### Antiseptic agents

An antiseptic agent may also be present in the gum solution. Examples of such an antiseptic include phenol, derivatives thereof, formalin, imidazole derivatives, sodium dehydroacetate, 4-isothiazoline-3-one derivatives, benzoisothiazoline-3-one, benztriazole derivatives, amidineguanidine derivatives, quaternary ammonium salts, pyridine derivatives, quinoline derivatives, guanidine derivatives, diazine, triazole derivatives, oxazole and oxazine derivatives.

The preferred amount of such an antiseptic to be added is such that it can exert a stable effect on bacteria, fungi, yeast or the like. Though depending on the kind of bacteria, fungi and yeast, it is preferably from 0.01 to 4 wt% relative to the gum solution.

Further, preferably, two or more antiseptics may be used in combination to exert an aseptic effect on various fungi and bacteria.

### Anti-foaming agents

An anti-foaming agent may also be present in the gum solution. The anti-foaming agent is preferably a silicone anti-foaming agent. Among these anti-foaming agents, either an emulsion dispersion type or a solubilized type anti-foaming agent may be used.

The proper amount of such an anti-foaming agent to be added is from 0.001 to 1.0 wt% relative to the gum solution.

### Ink receptivity agents

When gum solution is also jetted on the printing areas of the lithographic printing plate, an ink receptivity agent may also be present in the gum solution to ensure a rapid adhesion of printing ink. If the gum solution is solely jetted on the non-printing areas, then preferably no ink receptivity agent is present in the gum solution.

Examples of such an ink receptivity agent include turpentine oil, xylene, toluene, low heptane, solvent naphtha, kerosine, mineral spirit, hydrocarbons such as petroleum fraction having a boiling point of about 120°C to about 250°C, diester phthalates (e.g., dibutyl phthalate, diheptyl phthalate, di-n-octyl phthalate, di(2-ethylhexyl) phthalate, dinonyl phthalate, didecyl phthalate, dilauryl phthalate, butylbenzyl phthalate), aliphatic dibasic esters (e.g., dioctyl adipate, butylglycol adipate, dioctyl azelate, dibutyl sebacate, di(2-ethylhexyl) sebacate dioctyl sebacate), epoxidated triglycerides (e.g., epoxy soyabean oil), ester phosphates (e.g., tricresyl phosphate, trioctyl phosphate, trischloroethyl phosphate) and plasticizers having a solidification point of 15°C or less and a boiling point of 300°C or more at one atmospheric pressure such as esters of benzoates (e.g., benzyl benzoate).

Examples of other ink receptivity agents include ketones (e.g., cyclohexanone), halogenated hydrocarbons (e.g., ethylene dichloride), ethylene glycol ethers (e.g., ethylene glycol monomethyl ether, ethylene glycol monophenyl ether, ethylene glycol monobutyl ether), aliphatic acids (e.g., caproic acid, enathic acid, caprylic acid, pelargonic acid, capric acid, undecylic acid, lauric acid, tridecylic acid, myristic acid, pentadecylic acid, palmitic acid, heptadecylic acid, stearic acid, nonadecanic acid, arachic acid, behenic acid, lignoceric acid, cerotic acid, heptacosanoic acid, montanic acid, melissic acid, lacceric acid, isovaleric acid) and unsaturated aliphatic acids (e.g., acrylic acid, crotonic acid, isocrotonic acid, undecyclic acid, oleic acid, elaidic acid, cetoleic acid, erucic acid, butecidic acid, sorbic acid, linoleic acid, linolenic acid, arachidonic acid, propiolic acid, stearolic acid, clupanodonic acid, tariric acid, licanic acid). Preferably, it is an aliphatic acid, which is liquid at a temperature of 50°C, more preferably it has from 5 to 25 carbon atoms, most preferably it has from 8 to 21 carbon atoms.

The ink receptivity agent may be used singly or in combination with one or more thereof. The ink receptivity agent is preferably used in an amount of from 0.01 to 10 wt%, more preferably from 0.05 to 5 wt%. The foregoing ink receptivity agent may be present as an oil-in-water.

The present invention will now be illustrated by the following examples without however being limited thereto.

### EXAMPLES

### Materials

All materials used in the following examples were readily available from Aldrich Chemical Co. (Belgium) unless otherwise specified. The "water" used in the examples was demineralized water. The following materials were used:
Zonyl^{™} FSE from DuPont.
DYE-1 is methylorange from MERCK.
DYE-5 is C.I. Direct Blue 199 for which DuasynTM Direct Turquoise Blue FRL-SF from CLARIANT Benelux NV was used.
(4-aminobenzyl)-phosphonic acid diethyl ester from ALDRICH.
Propyleneglycol from CALDIC Belgium NV.
Diethyleneglycol from BASF Belgium NV.
2-pyrrolidone from BASF.
Ethyleneglycol from UCB.
TEGMBE is an abbreviation for Triethyleneglycolmonobutylether from VEL.
SMA1000P is a styrene maleic anhydride alternating copolymer supplied
by CRAY VALLEY.
SAA is a grained and anodized aluminium substrate. Graining was carried out in a 2 cell grainer using HCl (9.5 and 9.7g/L respectively)/ CH₃COOH (17.6 and 18.5g/L respectively) as an acid mixture, at a temperature of 26.5 ° and 25.3 °C and voltages of 21 and 22V. Anodisation was carried out in 2 cells containing sulfuric acid (129 g/L and 119 g/L respectively) at 45°C and 46.1 °C and voltages of 25.9V and 25V resulting in an anodic weight of 6.6g/m².
MAA differs from the method for preparing SAA substrate in that the anodisation was carried out in a mixture of H₃PO₄ and H₂SO₄ (resp.332 g/L and 52.9 g/L). The temperature of the anodisation liquid was 44°C and the resulting anodic weight was 2.43 g/m².

### Measurement methods

### 1. Visual contrast

A visual evaluation of the contrast in the lithographic image was performed by depositing a series of 2 or 3 dots of inkjet ink onto a lithographic printing plate precursor at room temperature using a 2 µL pipette. SAA and MAA were used as lithographic plate precursors. After drying the dots using a heat treatment of 15 minutes at 120°C, the contrast was evaluated in accordance with a criterion described below.
Criterion:
- OK =: a clear visual image of dots was observed.
- Not OK =: a poor image of dots was observed.
- None =: no image of dots could be observed

### 2. Gum contrast

The same lithographic plates having a series of dots used to evaluate the visual contrast were subsequently used to evaluate the contrast again after a gumming treatment.

A gum solution was prepared by diluting the gum RC 795 from AGFA with water to 50% of the original concentration. The gum solution was applied to the printing plate using a custom built clean-out unit. The printing plate was transported by a pair of driving rollers at a speed of one meter per minute. Gum was sprayed through a number of openings in three tubes. One of those tubes sprayed directly onto the printing plate, two other sprayed against a cylindrical brush situated further in the transportation path. This brush made contact with the printing plate. After the gum was applied, the printing plate was transported by a roller pair into a drying zone where the applied gum solution was dried with air of 47°C. The contrast was evaluated in accordance with a criterion described below.
Criterion:
- OK = the clear visual image of dots was still observed.
- Not OK = a poor image of dots was observed.
- None = no image of dots could be observed

### 3. Printing test

The same lithographic plates having a series of dots used to evaluate the visual contrast and the gum contrast were subsequently used to evaluate the printing quality.

The printing quality was investigated by mounting the printing plate on a Heidelberg sheet fed GTO46 offset press using a mixture of 3% FS101^{™} and 10% isopropanol as a fountain solution. Skinnex X800 black ink was used for printing on Rey Today Office Paper 80 g/m² delivered by GPG Papier NV. The optical density of the unprinted paper was 0.09.

A good printing quality requires a thorough clean-out in the non-printing areas and a rapid ink-uptake in the printing areas, i.e. the series of dots. A thorough clean-out means that, after a low number of prints, the optical density of a non-printing area on the paper was approximately equal to that of the unprinted paper. The ink-uptake was evaluated by visual inspection of the printing area on the paper after a number of prints. A rapid ink-uptake means that a high optical print density was obtained after a low number of prints. The ink-uptake was evaluated in accordance with a criterion described below.
Criterion:
- OK = rapid ink-uptake, printed image of high optical density after 10 revolutions of the offset press.
- Not OK = no printed image or a poor printed mage was observed after 100 revolutions of the offset press

### EXAMPLE 1

This example describes the synthesis of contrast dye CD-1 and CD-2.

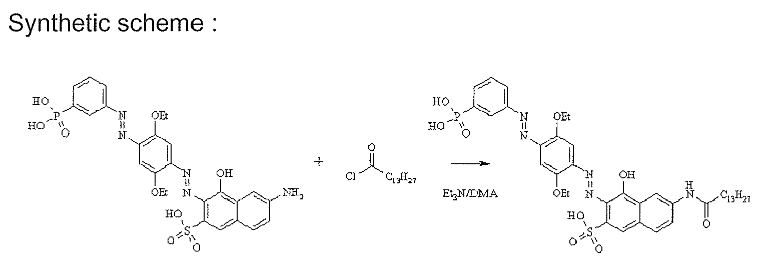

The starting black blue dye was prepared according to Example A of EP 0771860 A (SEIKO EPSON).

5 g of the starting black blue dye (8 mmol) was dissolved in 30 mL dimethyl acetamide. Then 1.4 mL (9.7 mmol) triethylamine was added. 2.8 g (11.3 mmol) of myristoyl chloride was added dropwise to the reaction mixture. The reaction was allowed to continue for 1 hour at room temperature. Contrast dye CD-1 partially precipitated from the medium, was isolated by filtration and washed with a small amount of dimethyl acetamide and ethylacetate. The filtrate was diluted with 300 mL ethyl acetate and a second fraction of contrast dye 1 precipitated. The second fraction was isolated by filtration and washed several times with 50 mL ethyl acetate. The pooled fractions were dried under vacuum.

Contrast dye CD-2 was prepared according to the same procedure, using stearoyl chloride in stead of myristoyl chloride.

### EXAMPLE 2

This example describes the synthesis of contrast dye CD-3.

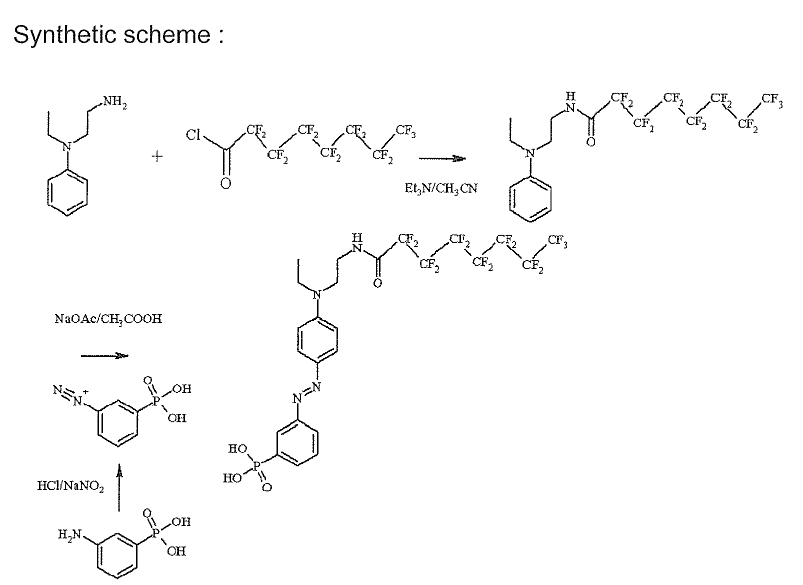

N-(2-aminoethyl)-N-ethyl-aniline was prepared according to Fazio M. , J. Org. Chem. (1984), 49(25), 4889-4893.

### Acylation of N-(2-aminoethyl)-N-ethyl-aniline :

20 g (0.12 mol) of N-(2-aminoethyl)-N-ethyl-aniline was dissolved in 100 mL of acetonitrile. 16.9 mL (0.12 mol) of triethylamine was added to this solution. A solution of 32 g (0.076 mol) of pentadecafluorooctanoyl chloride in 65 mL acetonitrile is added dropwise over 30 minutes. The reaction was allowed to continue for an additional 2 hours at room temperature. The precipitated triethylamine chlorohydrate was removed by filtration and the filtrate was diluted with 400 mL of a 1.2 N hydrochloric acid solution. The crude fluorinated aniline precipitated as a brown oil. The brown oil was redissolved in 300 mL methylene chloride. The methylene chloride was extracted 3 times with 0.1 M NaOH and 5 times with water until neutral pH. The methylene chloride was dried over MgSO₄ and evaporated under reduced pressure. The isolated fluorinated aniline was used without further purification.

### Diazotation of 3-aminophenyl phosphonic acid :

13.6 g (78 mmol) of 3-aminophenyl phosphonic acid was dissolved in 20 mL HCl (conc.). The reaction mixture was cooled to 0°C. A solution of 5.3 g of NaNO₂ in 10 mL water was added while keeping the temperature below 5°C. The mixture was stirred at 5 °C for 90 minutes, before adding to the mixture described below.

### Coupling of the diazonium salt :

20 g (36 mmol) of the fluorinated aniline was dissolved in 76 mL acetic acid. 8.75 g of sodium acetate was added and the mixture was cooled to 0 °C. The solution of the above prepared diazonium salt was added portion wise, while keeping the pH of the mixture around pH=7. If the pH dropped below 7, NaOH was added to the mixture until the pH was neutral. After the addition of the diazonium salt was completed, the pH was raised further to pH 12. The mixture was stirred for an additional hour at room temperature. The crude contrast dye CD-3 precipitated form the medium and was isolated by filtration. The isolated dye was treated with 200 mL methyl t.butyl ether and dried. 6.9 g of contrast dye CD-3 was isolated.

### EXAMPLE 3

This example describes the synthesis of contrast dye CD-4.

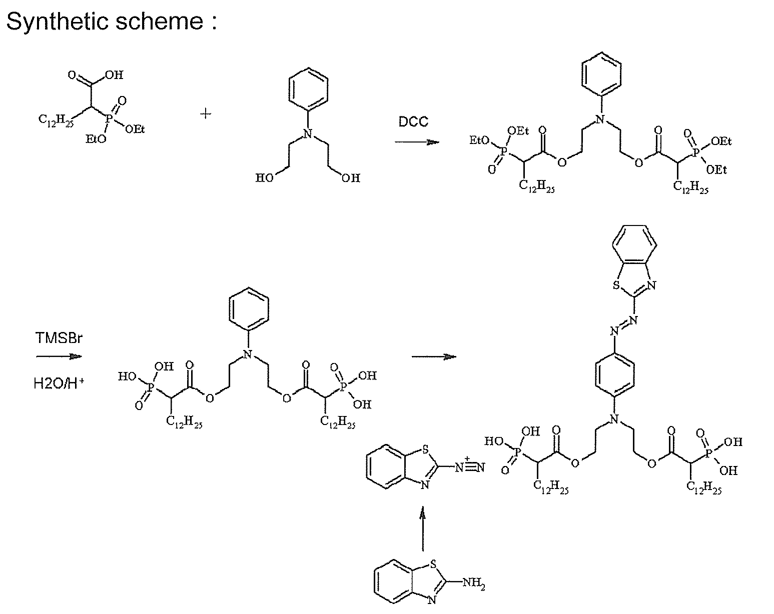

The carboxyphophonic ester was prepared as described in example 18 of WO 9619484 (PIERRE FABRE MEDICANIENT).

### Esterification of N,N-bis-(2-hydroxyethyl)aniline :

21.9 g (006 mol) of the carboxyphosphonic ester was dissolved in 150 mL methylene chloride. 13.61 g (0.066 mol) of dicyclohexyl carbodiimide in 100 mL methylene chloride was added and the mixture was stirred for 30 minutes at room temperature. 5.43 g (0.03 mol) of N,N-bis-(2-hydroxyethyl)aniline in 60 mL methylene chloride was added and the reaction was allowed to continue for 30 minutes at room temperature. After stirring over night, an additional 6.18 g of dicyclohexyl carbodiimide and 10.9 g of carboxyphosphonic acid were added and the reaction was allowed to continue at room temperature for an additional 30 minutes. The formed dicyclohexyl urea was removed by filtration and the solvent was removed under reduced pressure. The intermediate acylated aniline was isolated by preparative column chromatography (eluent : ethyl acetate on Kromasil Si 60 Å 10, 10 µm).

### Cleavage of the phosphonate esters :

4.35 g (5 mmol) of the intermediate anilino-phosphonate ester was dissolved in 40 mL methylene chloride. 5 g of trimethylsilyl bromide was added and the reaction was allowed to continue at room temperature for 2 hours. The solvent was removed under reduced pressure and the residue was treated over night with a mixture of 35 mL water, 30 mL methanol and 3 mL 2 N hydrochloric acid. The solvent was evaporated under reduced pressure. The residue was treated with a mixture of 40 mL methyl t.butyl ether and re-evaporated. The isolated diphosphonic acid was used without further purification.

### Diazotation of 2-amino-benzothiazole :

0.19 g (1.3 mmol) of 2-aminobenzothiazole was dissolved in 7.8 mL acetic acid and 2.6 mL concentrated sulfuric acid. The mixture was cooled to 0°C and a solution of 98 mg of NaNO₂ in 4 mL water was added. The reaction was allowed to continue for 2 hours at 0°C.

### Coupling of the diazonium salt :

1 g (1.3 mmol) of the diphosphonic acid was dissolved in 25 mL acetic acid. 1.4 g of sodium acetate was added. The diazotated 2-aminobenzothiazole was added to this mixture and reaction was allowed to continue at room temperature for 3 hours. The reaction mixture was pourred into 150 mL water and acidified with 10 mL 6 N HCl. The mixture was extracted 3 times with 100 mL n.- butanol. The pooled butanol extracts were dried over Na₂SO₄. The solvent was removed under reduced pressure and contrast dye CD-4 was purified by preparative column chromatography. (gradient elution form a mixture of 0.2 M ammonium acetate, adjusted to pH 8.7 with triethanol amine/ methanol 90/10 to 100% MeOH on a Varian Mega BE-C18 column).

Contrast dye CD-4 was isolated as a mixture of diastereoisomers.

### EXAMPLE 4

This example describes the synthesis of contrast dye CD-5.

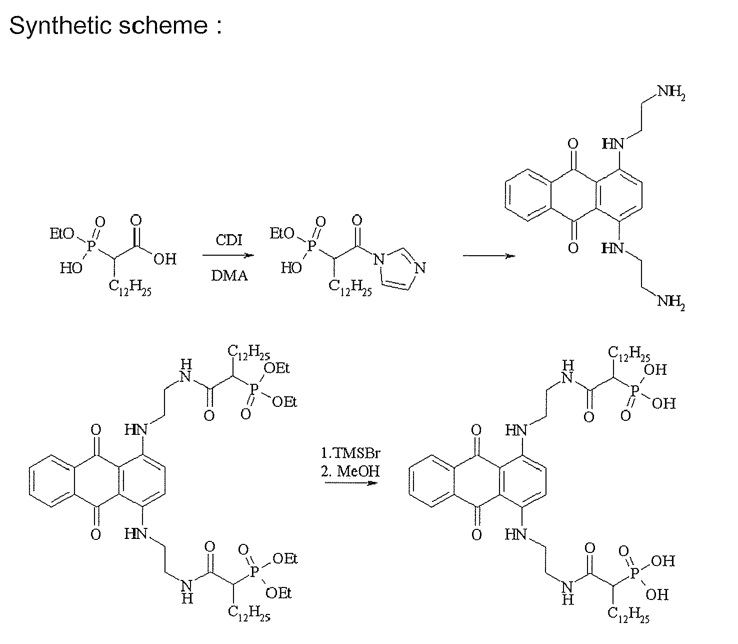

4 g (11 mmol) of the carboxyphosphonic ester, prepared according to WO 9619484 (PF MEDICAMENT ET AL), was dissolved in 30 mL of dimethyl acetamide. 2.14 g (15.2 mmol) of carbodiimidazole was added and the reaction was allowed to continue for 30 minutes at room temperature. Then 1.62 g (5 mmol) of the diamino anthraquinone dye, prepared according to EP 0154117 A (AMERICAN CYANAMID CO), in 80 mL of dimethyl acetamide was added to the reaction mixture and the reaction was allowed to continue for 16 hours at room temperature. The solvent was evaporated under reduced pressure and the residue was dissolved in 250 mL of ethyl acetate. The organic layer was washed twice with 250 mL of water, dried over MgSO₄ and evaporated under reduced pressure. The crude mixture was dissolved in 100 mL of methylene chloride and treated with 3.06 g (20 mmol) of trimethylsilyl bromide. The reaction was allowed to continue for 5 hours at room temperature. The solvent was removed under reduced pressure and 100 mL of methanol was added. Two drops of HCl (conc.) were added and the reaction was allowed to continue for 14 hours at room temperature. The solvent was removed under reduced pressure and the residue was purified by preparative column chromatography, using a Varian Mega BE-C18 flash column and a gradient elution from 50 % methanol/ 50 % 0.2M ammonium acetate, adjusted to pH 8.5 with triethanol amine, to pure methanol. 1.35 g of the anthraquinone dye was isolated. Analysis showed the presence of some residual esters and the product was treated again with 2 g of trimethylsilyl bromide in 100 mL of methylene chloride. The solvent was removed under reduced pressure and 100 mL of methanol was added. The reaction was allowed to continue for 48 hours. The solvent was removed under reduced pressure and the dye proved to be sufficiently pure for evaluation.

### EXAMPLE 5

This example describes the synthesis of contrast dye CD-11.

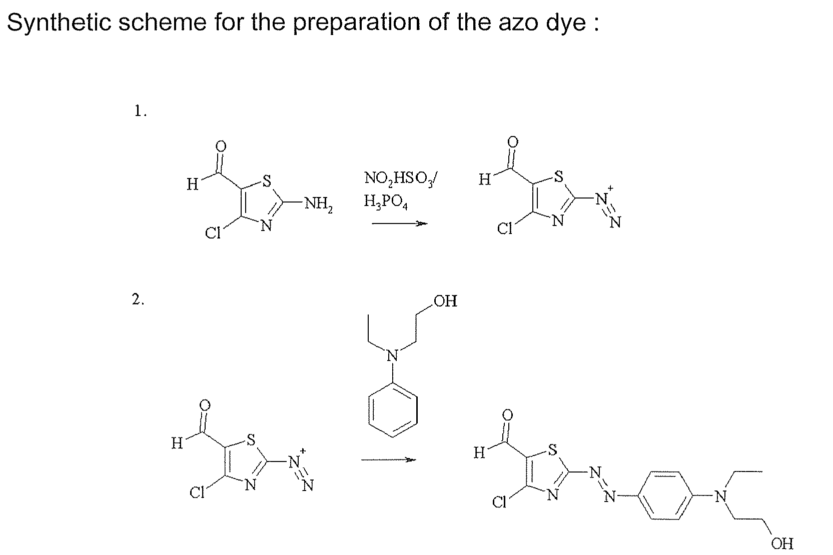

6.5 g (40 mmol) of 2-amino-4-chloro-thiazole-5-carbaldehyde was dissolved in 50 mL of phosphoric acid. The mixture was cooled to 0°C and 5.1 g (40 mmol) of nitrosylsulfuric acid was added while the temperature was kept at 0°C.

7.5 g (45 mmol) of 2-hydroxyethyl-ethyl aniline was dissolved in a mixture 100 g of ice and 50 mL of ethyl acetate. The diazotated thiazole was added slowly to this mixture. The magenta dye was formed immediately. 500 mL of water was added to the reaction mixture and the dye precipitated from the medium. The dye was isolated by filtration and washed twice with water and dried. 6.8 g of the dye was isolated.

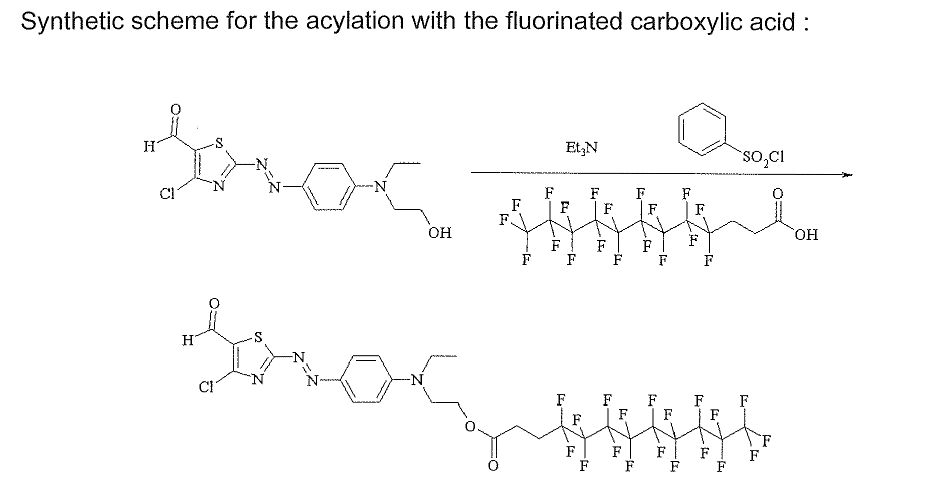

24.6 g (50 mmol) of the fluorinated carboxylic acid was dissolved in 50 mL of ethyl acetate. 7 mL (50 mmol) of triethyl amine was added dropwise followed by the addition of 4.4 g (25 mmol) of benzene sulfochloride. The reaction was allowed to continue for 30 minutes at room temperature. 9.7 g (25 mmol) of the in step 1 prepared azo dye, dissolved in 50 mL of dimethyl acetamide, was added and the reaction was allowed to continue for 16 hours at room temperature. After 16 hours 10 mol% of dimethylaminopyridine and an extra equivalent of the symmetrical anhydride, prepared from the fluorinated carboxylic acid, triethyl amine and benzenesulfochloride as described above, were added. The reaction was allowed to continue for an extra 24 hours. The solvent was evaporated under reduced pressure and the residue was dissolved in 100 mL of methyl t.butyl ether. The organic layer was extracted twice with 100 mL of water, dried over MgSO₄ and evaporated under reduced pressure. The fluorinated azo dye was isolated by preparative column chromatography on a Varian Mega Bond Elut Si column, using ethyl acetate/hexane 50/50 as eluent. 5.6 g of the dye was isolated.

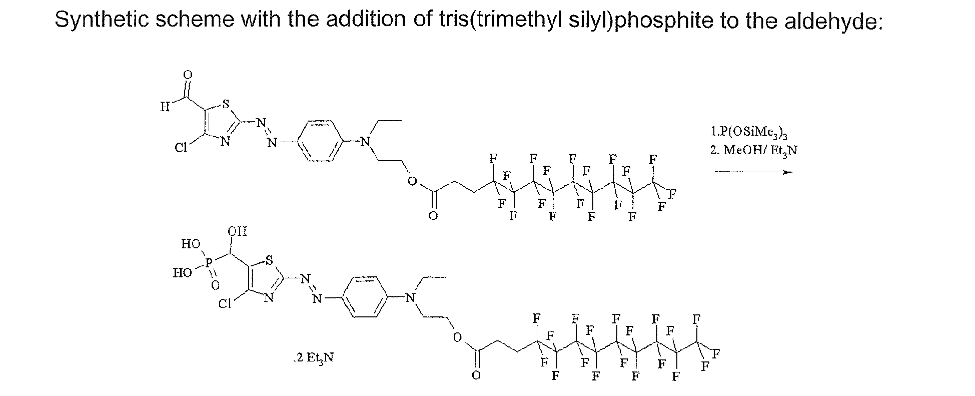

5 g (6 mmol) of the fluorinated azo dye was dissolved in 40 mL of THF. 3 g (10 mmol) of tris(trimethylsilyl)phosphite was added and the reaction was allowed to continue for 24 hours at room temperature. 1.4 mL (10 mmol) of triethyl amine and 40 mL of methanol were added and the reaction was allowed to continue for 24 hours at room temperature. The solvents were removed under reduced pressure and the phosphonated dye was isolated by preparative column chromatography on a Varian Mega BE-C18 flash column using methanol/water as eluent. 0.9 g of the dye was isolated.

### EXAMPLE 6

This example describes the synthesis of contrast dyes CD-12 and DYE-4. The contrast dye DYE-4 was synthesized for a comparative inkjet ink having a contrast dye with two shorter aliphatic groups than the contrast dye CD-12, i.e. ethyl instead of hexyl.

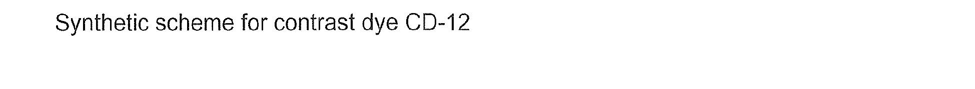

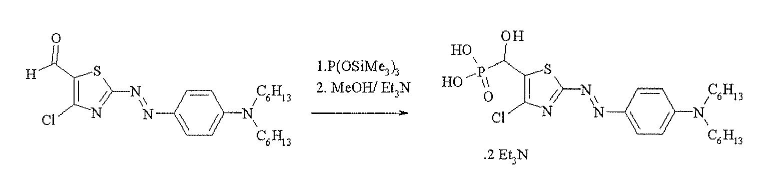

The starting azo dye was prepared in a similar matter as described above for contrast dye CD-11, using dihexyl aniline instead of 2-hydroxyethyl-ethyl-aniline.

4.4 g (10 mmol) of the azo dye was dissolved in 25 mL of THF. 3 g (10 mmol) of tris(trimethylsilyl)phosphite was added and the reaction was allowed to continue at room temperature for 6 hours. 10 % excess of tris(trimethylsilyl)phosphite was added and the reaction was allowed to continue for an extra 12 hours. 50 mL of methanol and 10 mL of triethyl amine were added and the reaction was allowed to continue at room temperature for 12 hours. The reaction mixture was evaporated under reduced pressure and the dye was isolated by preparative column chromatography on a Varian Mega BE-C18 flash column, using a gradient elution from 100 % water to methanol/ water 80/20. 4.4 g of the contrast dye CD-12 was isolated.

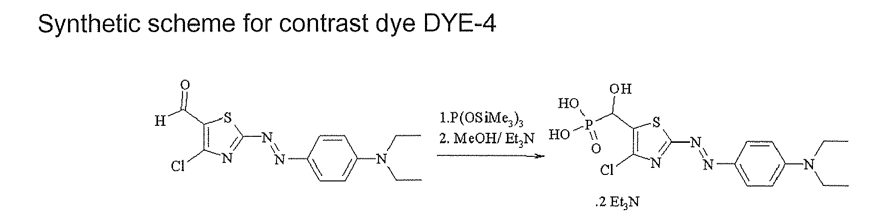

The starting azo dye was prepared in a similar matter as described above for contrast dye CD-11, using diethyl aniline in stead of 2-hydroxyethyl-ethyl-aniline.

3.2 g (10 mmol) of the azo dye was dissolved in 25 mL of THF. 3 g (10 mmol) tris(trimethylsilyl)phosphite was added and the reaction was allowed to continue at room temperature for 16 hours. 60 mL of methanol and 5 mL of triethyl amine were added and the reaction was allowed to continue at room temperature for 12 hours. The solvent was removed under reduced pressure and the residue was redissolved in 100 mL of water. The aqueous layer was extracted twice with 100 mL of ethylacetate to remove residual organic contaminants and the aqueous layer was evaporated under reduced pressure. The residue was treated with 100 mL of hexane, isolated by filtration and dried. 3.7 g of the contrast dye DYE-4 was isolated and used for evaluation without further purification.

### EXAMPLE 7

This example illustrates that low molecular weight contrast dyes in accordance with the present invention not only produce a clearly visible lithographic image that remains visible after gumming, but are also suitable for printing in the absence of a traditional oleophilizing agent.

### Dyes for comparative inkjet inks

The following dyes were used to prepare comparative inkjet inks:

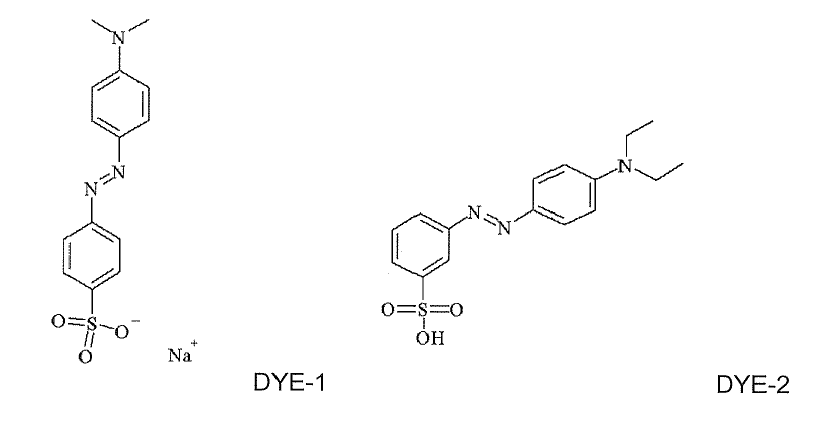

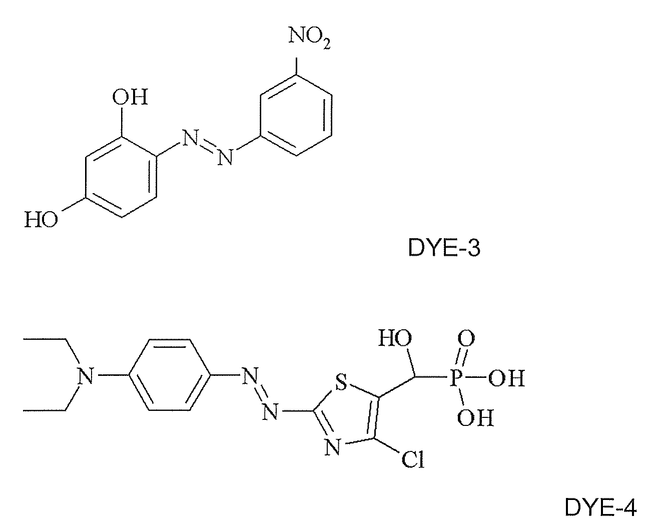

The contrast dye DYE-1 is widely commercially available. The reference dyes DYE-2 and DYE-3 were prepared by conventional diazonium chemistry as described in Vogel's Textbook of Practical Organic Chemistry, fourth edition (Longman, London and New York). The synthesis of DYE-4 is described above in Example 6.

### Oleophilizing compound OLEO-1

A first colourless oleophilizing compound contains two A groups and two phosphonic acids groups (A groups) but no chromophore group.

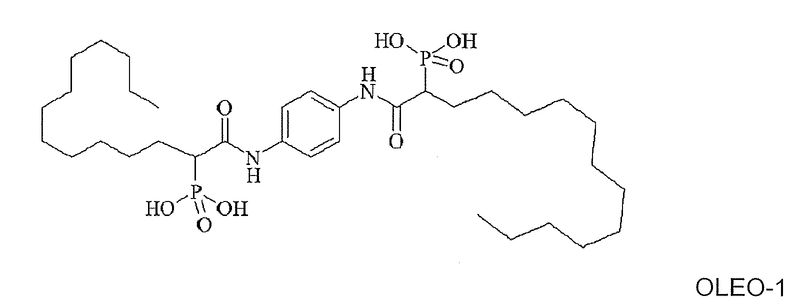

### Synthesis of oleophilizing compound OLEO-1

The synthetic scheme: 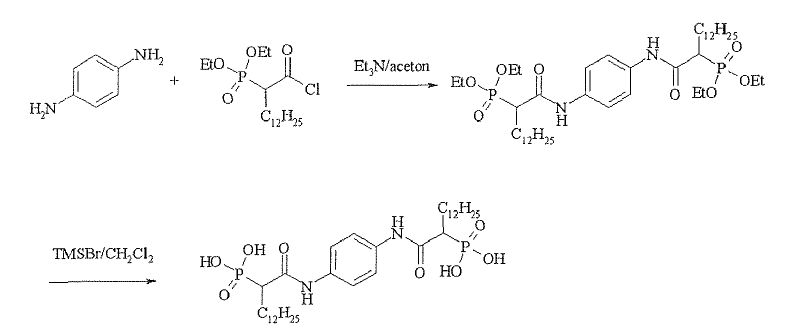 5.4 g (50 mmol) of p.-phenylene diamine and 15.3 mL (110 mmol) of triethyl amine were dissolved in 200 mL of acetone. 47.9 g (125 mmol) of (1-chlorocarbonyl-tridecyl)-phosphonic acid diethyl ester, prepared from the carboxylic acid using thionyl chloride and dimethyl formamide as catalyst, was dissolved in 100 acetone and added to the reaction mixture. The reaction was allowed to continue for 3 hours at room temperature. An extra 5.4 mL of triethyl amine was added and the reaction was allowed to continue over night at room temperature. The precipitated triethyl amine hydrochloride was removed by filtration and the acetone was evaporated under reduced pressure. The crude product was purified by preparative column chromatography, using methylene chloride/methanol 95/5 as eluent on Kromasil Si 60A 10µm. 9.2 g of the intermediate was isolated as a mixture of diastereoisomers.

9.2 g (11.5 mmol) of the purified intermediate was dissolved in 200 mL of methylene chloride. 10.6 g (69 mmol) of trimethylsilyl bromide was added and the reaction was allowed to continue for 3 days at room temperature. The solvent is removed under reduced pressure and 100 mL of water and 1 mL of HCl 1N was added. The reaction was allowed to continue for 24 hours at room temperature. The precipitated bis-phosphonic acid was isolated by filtration, washed with 60 mL of water and dried. The crude product was treated with 80 mL of methyl t.butyl ether, isolated by filtration and dried. 6.8 g of the oleophilizing compound OLEO-1was isolated.

### Oleophilizing compound OLEO-2

A second colourless oleophilizing compound contains two phosphonic acid groups (A groups) connected by 6 carbon atoms and lacking again a chromophore group D.

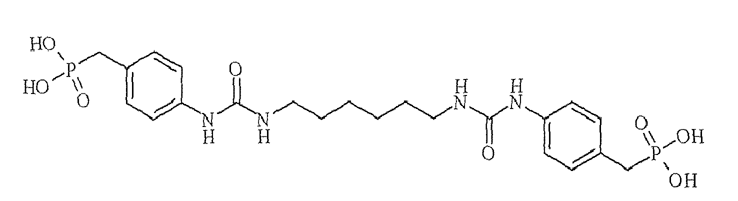

### Synthesis of oleophilizing compound OLEO-2

The synthetic scheme

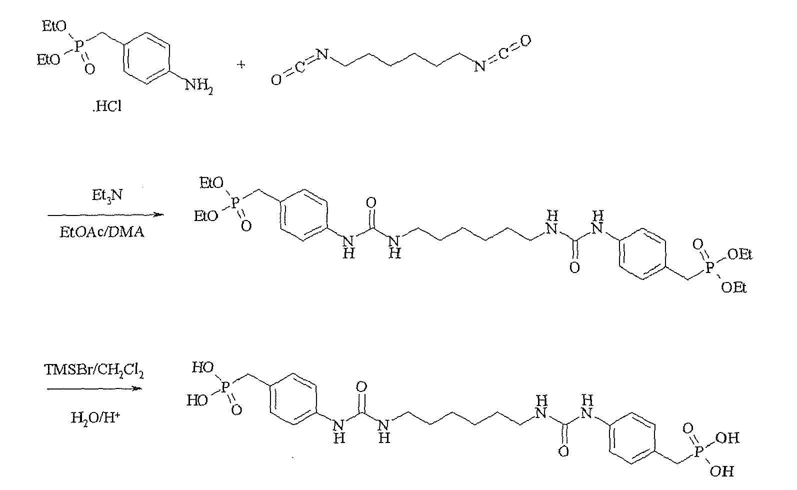

1.6 g (10 mmol) of hexamethylene diisocyanate and 2 g of (4-aminobenzyl)-phosphonic acid diethyl ester chlorohydrate were added to 100 mL of ethyl acetate. 3.2 g of (4-aminobenzyl)-phosphonic acid diethyl ester chlorohydrate was suspended in 50 mL of dimethyl acetamide and added to the mixture. 2.8 mL of triethyl amine was added and all compounds dissolved into the mixture. The reaction was allowed to continue for 16 hours at room temperature. The crude intermediate precipitated from the medium and was isolated by filtration. The intermediate was purified by preparative column chromatography, using methylene chloride/ ethanol 93/7 as eluent on Kromasil Si 60A 10µm. 1.8 g (2.7 mmol) of the purified intermediate was dissolved in 40 mL of methylene chloride and 2.5 g (16.2 mmol) of trimethylsilyl bromide was added. The reaction was allowed to continue for several days at room temperature. The solvent was removed under reduced pressure and 50 mL of water and 5 mL of 1 N HCl were added. The reaction is allowed to continue for 24 hours at room temperature. The crude bis-phosphonic acid was isolated by filtration, treated with acetone and dried. 0.7 g of the oleophilizing compound OLEO-2 was isolated.

### Preparation of inkjet inks

All inkjet inks were prepared in the same manner to obtain a composition as described in Table 3 for the comparative inkjet inks and in Table 4 for the inventive inkjet inks.

**Table 3**

| **wt% of Compound** | **Comparative inkjet inks** | | | | | | |
|---|---|---|---|---|---|---|---|
| | **C-1** | **C-2** | **C-3** | **C-4** | **C-5** | **C-6** | **C-7** |
| DYE-1 | --- | 1.00 | --- | --- | --- | --- | --- |
| DYE-2 | --- | --- | 0.95 | --- | --- | --- | --- |
| DYE-3 | --- | --- | --- | 1.00 | --- | --- | --- |
| DYE-4 | --- | --- | --- | --- | 2.00 | --- | --- |
| DYE-5 | --- | --- | --- | --- | --- | 1.00 | 1.00 |
| Propylene glycol | 21.00 | --- | --- | --- | 21.00 | 21.00 | --- |
| Diethylene glycol | 7.00 | --- | --- | --- | 7.00 | 7.00 | --- |
| Ethylene glycol | 3.40 | 4.00 | 5.20 | 2.30 | --- | --- | --- |
| 2-pyrrolidone | --- | 8.00 | 7.60 | 8.00 | --- | --- | --- |
| TEGMBE | --- | 6.00 | 5.70 | 6.00 | --- | --- | --- |
| Triethanol amine | --- | --- | --- | --- | 1.45 | 2.55 | 0.71 |
| Isopropanol | --- | --- | --- | --- | --- | --- | 10.00 |
| Zonyl^{™} FSE | 2.00 | 1.00 | 0.82 | 1.00 | --- | --- | --- |
| OLEO-1 | --- | --- | --- | --- | --- | 2.00 | --- |
| OLEO-2 | --- | --- | --- | --- | --- | --- | 1.00 |
| water | 66.60 | 80.00 | 79.73 | 81.70 | 68.55 | 66.45 | 87.29 |

**Table 4**

| **wt% of Compound** | **Inventive inkjet inks** | | | | | |
|---|---|---|---|---|---|---|
| | **I-1** | **I-2** | **I-3** | **I-4** | **I-5** | **I-6** |
| CD-3 | 1.00 | --- | 1.00 | --- | --- | --- |
| CD-5 | --- | --- | --- | --- | --- | 2.00 |
| CD-11 | --- | 2.50 | --- | 1.21 | --- | --- |
| CD-12 | --- | --- | --- | --- | 2.00 | --- |
| Propylene glycol | --- | 21.00 | --- | 21.00 | 21.00 | 21.00 |
| Diethylene glycol | --- | 7.00 | --- | 7.00 | 7.00 | 7.00 |
| Ethylene glycol | 4.00 | --- | 4.00 | --- | --- | --- |
| 2-pyrrolidone | 8.00 | --- | 8.00 | --- | --- | --- |
| TEGMBE | 6.00 | --- | 6.00 | --- | --- | --- |
| Triethanol amine | --- | --- | --- | --- | --- | 1.29 |
| Zonyl^{™} FSE | --- | --- | 1.00 | 0.48 | --- | --- |
| water | 81.00 | 69.50 | 80.00 | 70.31 | 70.00 | 68.71 |

First the liquid carrier composition optimized for jetting performance was prepared under stirring at room temperature by adding the organic solvents, i.e. alkylene glycol(ether) and when applicable the 2-pyrolidone or isopropanol, to demineralised water. Stirring was continued until a homogeneous solution was obtained. Then the low molecular weight contrast dye was introduced into this carrier. Some contrast dyes required addition of triethanolamine to improve the solubility of the contrast dye in the liquid carrier (see table). In a number of cases the inkjet ink composition was completed by addition of an oleophilizing compound: Zonyl^{™} FSE, OLEO-1 or OLEO-2.

The comparative inkjet inks C-1 to C-7 and the inventive inkjet inks I-1 to I-6 were evaluated on their image contrast and on their printing properties. The results are shown in Table 5.

**Table 5**

| **Inkjet Ink** | **Oleophilizing compound** | **Dye** | **Visual contrast** | **Gum Contrast** | **Printing test** |
|---|---|---|---|---|---|
| C-1 | Zonyl^{™} FSE | None | None | None | OK |
| C-2 | Zonyl^{™} FSE | DYE-1 | OK | Not OK | OK |
| C-3 | Zonyl^{™} FSE | DYE-2 | OK | Not OK | OK |
| C-4 | Zonyl^{™} FSE | DYE-3 | OK | Not OK | OK |
| C-5 | No | DYE-4 | OK | OK | Not OK |
| C-6 | OLEO-1 | DYE-5 | OK | Not OK | OK |
| C-7 | OLEO-2 | DYE-5 | OK | Not OK | Not OK |
| I-1 | No | CD-3 | OK | OK | OK |
| I-2 | No | CD-11 | OK | OK | OK |
| I-3 | Zonyl^{™} FSE | CD-3 | OK | OK | OK |
| I-4 | Zonyl^{™} FSE | CD-11 | OK | OK | OK |
| I-5 | No | CD-12 | OK | OK | OK |
| I-6 | No | CD-5 | OK | OK | OK |

From Table 5, it can be seen that none of the comparative inkjet inks C-1 to C-7 retained a visual contrast in the lithographic image after a gumming treatment with the exception of comparative inkjet ink C-5 which contained a contrast dye DYE-4 with aliphatic groups that are too short for ink-uptake. On the other hand the inventive inkjet inks I-1 to I-6 all exhibited good visual contrast after gumming treatment. The inventive inkjet inks I-1, I-2, I-5 and I-6 show that for these contrast dyes the presence of an extra oleophilizing compound in the ink was not required.

### EXAMPLE 8

This example describes the synthesis of contrast dye CPOL-1. 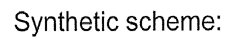 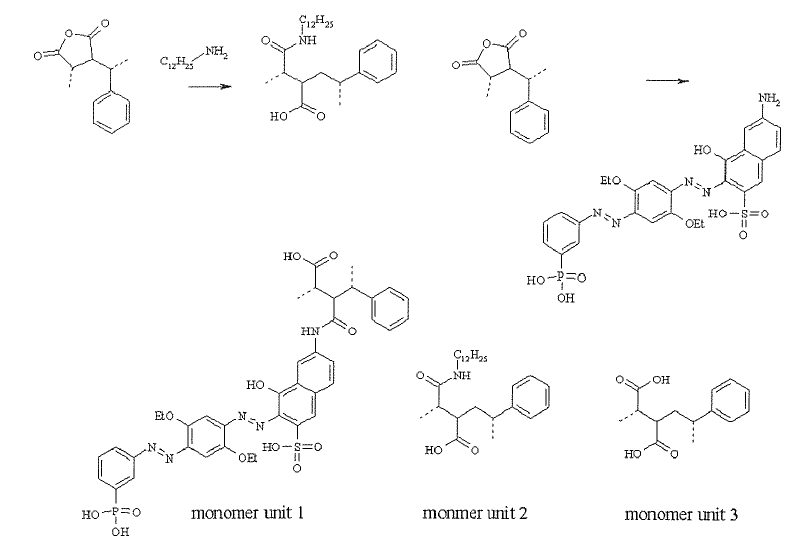 10.2 g of SMA1000P was dissolved in 50 mL of dimethyl acetamide. The mixture was heated to 50°C and a solution of 4.6 g of dodecyl amine and 4.4 mL of diisopropyl ethyl amine was added dropwise. The reaction was allowed to continue for 2 hours at 50°C. After 2 hours, a solution of 5.1 g of the blue black dye in 20 mL of dimethyl acetamide and 5.5 mL of 5 N NaOH was added. The reaction was allowed to continue for 16 hours at 60°C. The polymer was reactivated by adding 5.2 g of dicyclohexyl carbodiimide to the reaction mixture. The reaction was allowed to continue for 2 hours at 65 °C. The polymer was reactivated for a second time using 5.2 g of dicyclohexyl carbodiimide. The reaction was allowed to continue for 2 hours at 65°C. The reaction mixture was allowed to cool down to room temperature and the formed dicyclohexyl ureum was removed by filtration. 400 mL of water was added to the filtrate and an extra amount of dicyclohexyl ureum precipitated. The precipitated ureum was removed by filtration and the solvent was removed under reduced pressure. Contrast dye CPOL-1 was isolated by preparative size exclusion chromatography using a Sephadex G25 chromatographic phase, supplied by Pharmacia.

### EXAMPLE 9

This example describes the synthesis of contrast dye CPOL-6.

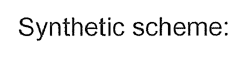

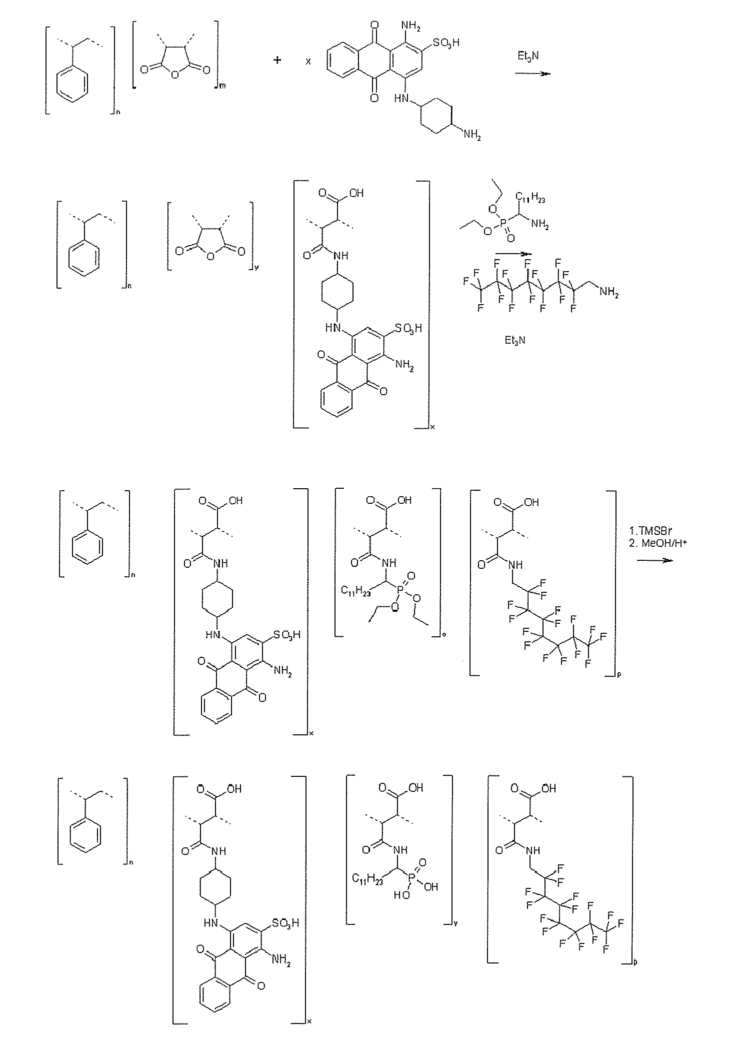

8.2 g of SMA1000P was dissolved in 40 mL of dimethyl acetamide 4.2 g of the anthraquinone dye (Hydroparabromesaure, supplied by Bayer AG) and 2 mL oftriethyl amine were added. The reaction was allowed to continue at room temperature for 16 hours. The reaction mixture was heated to 100°C for an hour to drive the reaction to completion. After cooling down to room temperature, 2.2 g of (1-aminopentyl)-phosphonic acid diethyl ester was added and the reaction was allowed to continue for one hour at room temperature, followed by the addition of 8 g of the fluorinated amine. The reaction was allowed to continue for 16 hours at room temperature. 15 g of trimethylsilyl bromide was added and the reaction was allowed to continue for 24 hours at room temperature. 150 mL of methanol was added and the reaction mixture was stirred for 16 hours at room temperature. The polymer was precipitated in water, isolated by filtration and dried. ³¹P-NMR clearly proved the presence of deprotected phosphonic acids, while ¹⁹F-NMR proved the presence of polymer bound fluorinated aliphatic chains.

### EXAMPLE 10

This example describes the synthesis of contrast dye CPOL-7.

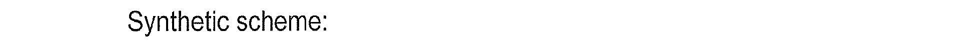

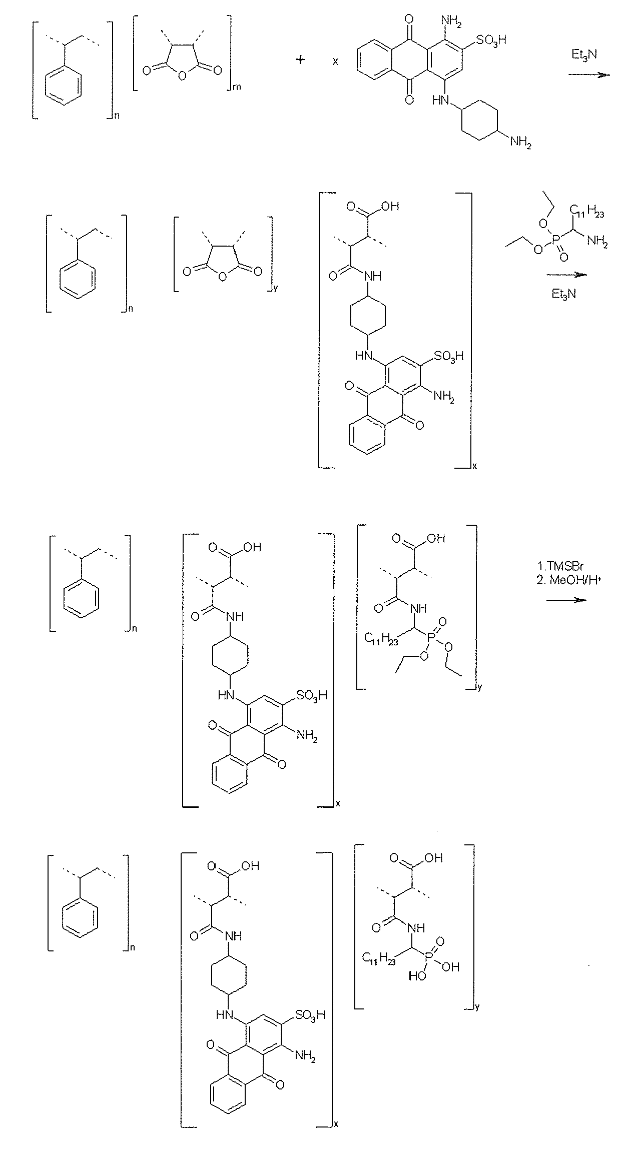

4.0 g of SMA1000P was dissolved in 40 mL of dimethyl acetamide. 4.2 g of the anthraquinone dye (Hydroparabromesaure, supplied by Bayer AG) and 1.4 mL of triethyl amine were added. The reaction was allowed to continue at room temperature for 16 hours. The reaction mixture was heated to 100°C for an hour to drive the reaction to completion. After cooling down to room temperature 2.8 g of (1-aminododecyl)-phosphonic acid diethyl ester (prepared according to the method described by Kudzin et al., Synthesis 1980, 1028) and 1 g of triethyl amine were added and the reaction was allowed to continue for 16 hours at room temperature. 12.4 g of trimethylsilyl bromide was added and the reaction was allowed to continue 24 hours. 100 mL of methanol was added and the reaction was allowed to continue for 48 hours. The polymer was precipitated in water and was isolated by filtration. The crude polymer was purified using preparative size exclusion chromatography on Sephadex G25 (Pharmacia). 5 g of the polymer was isolated. ³¹P-NMR proved the presence of mainly uncleaved phosphonate esters. The polymer was redissolved in 40 mL of dimethyl acetamide and treated with 10 mL of trimethylsilyl bromide. The reaction was allowed to continue for 16 hours. 100 mL of methanol was added and the reaction mixture was stirred for 16 hours. The polymer was precipitated with water, isolated by filtration and dried. ³¹P-NMR clearly proved the presence of fully deprotected phosphonic acids. The experimental n/x/y ratio proved to be 50/25/25.

### EXAMPLE 11

This example illustrates that contrast dyes having a polymeric backbone in accordance with the present invention not only produce a clearly visible lithographic image that remains visible after gumming, but is suitable for printing in the absence of a traditional oleophilizing agent.

### Polymer POL-1 for comparative inkjet ink

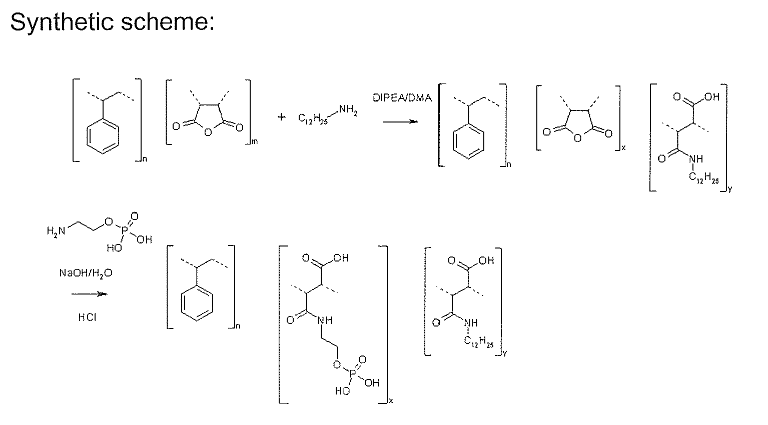

10.2 g of SMA1000P was dissolved in 50 mL of dimethyl acetamide. 4.6 g of dodecyl amine and 4.4 mL of diispropyl ethyl amine were added dropwise at 50°C. The reaction was allowed to continue at room temperature for 2 hours. A solution of phosphoric acid mono-(2-amino-ethyl)-ester in 10 mL of dimethyl acetamide, 7 mL of 5N NaOH and 4.4 mL of diisopropyl ethyl amine was added at 50°C. The reaction was allowed to continue for 16 hours at room temperature. A small fraction of precipitated product was removed by filtration. 100 mL of water was added to the filtrate and the mixture was acidified with 15 mL of 5M HCl. The polymer precipitated from the medium and was isolated by filtration. The polymer was resuspended in 100 mL of water, isolated by filtration and dried. 17.9 g of the polymer POL-1 was isolated. The experimental n/x/y ratio based on ¹H-NMR spectroscopy proved to be 56/19/25.

### Polymer POL-1 for comparative inkjet ink

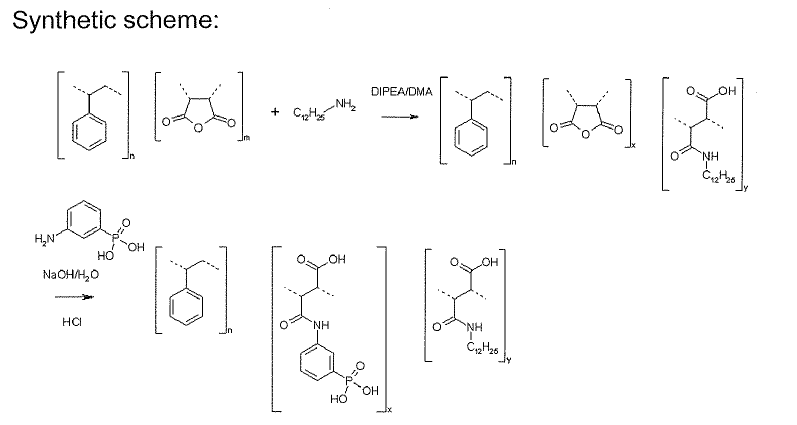

10.2 g of SMA1000P was dissolved in 50 mL of dimethyl acetamide. 4.6 g of dodecyl amine and 4.4 mL of diisopropyl ethyl amine were added dropwise at 50°C. The reaction was allowed to continue at 50°C for 2 hours. A solution of 4.3 g (3-aminophenyl)-phosphonic acid in 10 mL of dimethyl acetamide, 4.4 mL of diispropyl ethyl amine and 5 mL of 5 N NaOH was added at 50°C. The reaction was allowed to continue for 2 hours at 50°C and further over night at room temperature. 100 mL of water was added to the reaction mixture and the mixture was acidified with 20 mL of 5N HCl. The polymer precipitated from the medium and was isolated by filtration. The polymer was treated with 200 mL of water, isolated by filtration and treated with 150 mL of isopropyl acetate. The undissolved residue was removed by filtration and washed with 50 mL of ethylacetate. The filtrate was evaporated under reduced pressure and the residue was treated with 200 mL of acetonitrile for 1 hour. The polymer POL-2 was isolated by filtration, treated for a second time with 150 mL of acetonitrile, isolated by filtration and dried. 15.8 g of the polymer POL-2 was isolated. Th n/x/y ratio proved to be 53/20/27 based on ¹H-NMR-spectroscopy.

### Preparation of inkjet inks

All inkjet inks were prepared in the same manner to obtain a composition as described in Table 6 for the comparative inkjet inks C-8 and C-9 and for the inventive inkjet inks I-7 to I-10.

**Table 6**

| **wt% of Compound** | **C-8** | **C-9** | **I-7** | **I-8** | **I-9** | **I-10** |
|---|---|---|---|---|---|---|
| POL-1 | 1.87 | --- | --- | --- | --- | --- |
| POL-2 | --- | 1.89 | --- | --- | --- | --- |
| CPOL-1 | --- | --- | 2.00 | --- | --- | --- |
| CPOL-7 | --- | --- | --- | 2.50 | 1.21 | --- |
| CPOL-6 | --- | --- | --- | --- | --- | 2.50 |
| DYE-5 | 0.94 | 0.94 | --- | --- | --- | --- |
| Propylene glycol | 19.60 | 19.80 | 21.00 | 21.00 | 21.00 | 21.00 |
| Diethylene glycol | 6.50 | 6.60 | 7.00 | 7.00 | 7.00 | 7.00 |
| Triethanol amine | 6.55 | 5.57 | --- | --- | --- | --- |
| Zonyl^{™} FSE | --- | --- | --- | --- | 0.48 | --- |
| Water | 64.54 | 65.20 | 70.00 | 69.50 | 70.31 | 69.50 |

First the liquid carrier composition optimized for jetting performance was prepared under stirring at room temperature by adding the organic solvents, i.e. propylene glycol and diethylene glycol, to demineralised water. Stirring was continued until a homogeneous solution was obtained. Then the contrast dye (DYE-5 for the comparative inkjet inks C-8 and C-9 and CPOL-1, CPOL-6 or CPOL-7 for the inventive inkjet inks I-7 to I-10) was introduced into this carrier. The contrast dye DYE-5 required addition of triethanol amine to improve the solubility of the contrast dye in the liquid carrier. The composition of the inventive inkjet ink I-9 was completed by addition of Zonyl^{™} FSE as an oleophilizing compound.

The comparative inkjet inks C-8 and C-9 and the inventive inkjet inks I-7 to I-10 were evaluated on their image contrast and printing properties. The results are shown in Table 7.

**Table 7**

| **Inkjet Ink** | **Visual contrast** | **Gum contrast** | **Printing test** |
|---|---|---|---|
| C-8 | OK | Not OK | OK |
| C-9 | OK | Not OK | OK |
| I-7 | OK | OK | OK |
| I-8 | OK | OK | OK |
| I-9 | OK | OK | OK |
| I-10 | OK | OK | OK |

From Table 7, it can be seen that the comparative inkjet inks C-8 and C-9 retained no visual contrast in the lithographic image after a gumming treatment. On the other hand the inventive inkjet inks I-7 to I-10 all exhibited good visual contrast after gumming treatment, as well as a rapid ink-uptake. The inventive inkjet inks I-7, I-8 and I-10 show that for these contrast dyes the presence of an extra oleophilizing compound, such as Zonyl^{™} FSE in the inventive inkjet ink I-9, was not required.

## Claims

1. A contrast dye for preparing a lithographic printing plate comprising at least one A, D and B group wherein
A represents a phosphorous containing group capable of reacting with the surface of a lithographic receiver;
D represents a chromophore group absorbing light between 400 and 700 nm; and
B represents an aliphatic group of at least 6 carbon atoms;
**characterized in that** said aliphatic group B contains at least one fluorine atom.

2. A contrast dye according to claim 1 wherein said contrast dye has the structure AₓD_{y}B_{z} wherein x, y and z are each independently chosen integers from 1 to 10000 and the A and B groups are covalently bonded to the chromophore group D.

3. A contrast dye according to claim 2 wherein x and z are each independently chosen integers from 1 to 8 and y is 1 or 2.

4. A contrast dye according to claim 1 wherein said contrast dye has a polymeric backbone and the groups A, D and B are covalently bonded to the polymeric backbone according to one or more structures selected from the group consisting AₓD_{y}B_{z}, AₓD_{y}, AₓB_{z}, D_{y}B_{z}, A, D and B; and
wherein x and z are each independently chosen integers from 1 to 8 and y is 1 or 2.

5. A contrast dye according to any of claims 1 to 4 wherein said phosphorous containing group capable of reacting with the surface of a lithographic receiver is represented by Formula (I): 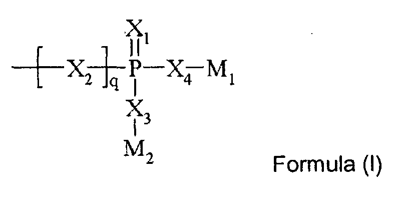 wherein
X₁, X₂, X₃ and X₄ are independently selected from oxygen or sulfur;
q represents 0 or 1;
M₁ is a proton or a counterion to compensate the negative charge of X₄;
M₂ is a proton or a counterion to compensate the negative charge of X₃ or represents a substituted or unsubstituted, saturated or unsaturated aliphatic chain, a substituted or unsubstituted aryl or hetero-aryl group.

6. A contrast dye according to claim 5 wherein said phosphorous containing group capable of reacting with the surface of a lithographic receiver represented by Formula (I) is selected from the group consisting of - O-PO₃H₂, -O-PO₃HR, -PO₃H₂ or - PO₃HR with R representing methyl or ethyl.

7. A contrast dye according to any of claims 1 to 6 wherein said aliphatic group contains at least 5 fluorine atoms.

8. A contrast dye according to any of claims 1 to 7 wherein said aliphatic group comprises a fluorinated straight chain aliphatic group containing at least 6 carbon atoms.

9. A contrast dye according to claim 8 wherein said straight chain aliphatic group is represented by - (CF₂-CF₂)ₙCF₃ with n representing an integer between 3 and 20.

10. A contrast dye according to any of claims 1 to 9 wherein said chromophore group D is selected from the group consisting of an azo dye with a molar extinction coefficient larger than 10³/ mol⁻¹ cm⁻¹, an anthraquinone dye, a (poly)methine dye, an azomethine dye, a disazo dye, a carbonium dye, a styryl dye, a stilbene dye, a phthalocyanine dye, a coumarin dye, an aryl-carbonium dye, a nitro dye, a naphtholactam dye, a dioxazine dye, a flavin dye and a formazan dye.

11. A lithographic printing plate containing a contrast dye, said contrast dye comprising at least one A, D and B group wherein
A represents a phosphorous containing group capable of reacting with the surface of a lithographic receiver;
D represents a chromophore group absorbing light between 400 and 700 nm; and
B represents an aliphatic group of at least 6 carbon atoms.

## Patentansprüche

1. Ein zur Herstellung einer lithografischen Druckplatte verwendeter Kontrastfarbstoff, der zumindest eine A-Gruppe, D-Gruppe und B-Gruppe enthält, wobei :
A eine phosphorhaltige Gruppe bedeutet, die in der Lage ist, mit der Oberfläche eines lithografischen Empfangselements zu reagieren,
D eine Licht mit einer Wellenlänge zwischen 400 nm und 700 nm absorbierende Chromophorgruppe bedeutet und
B eine zumindest 6 Kohlenstoffatome enthaltende alifatische Gruppe bedeutet,
**dadurch gekennzeichnet, dass** die alifatische Gruppe B zumindest ein Fluoratom enthält.

2. Kontrastfarbstoff nach Anspruch 1, **dadurch gekennzeichnet, dass** der Kontrastfarbstoff die Struktur AₓD_{y}B_{z} aufweist, wobei x, y und z unabhängig voneinander jeweils eine ganze Zahl zwischen 1 und 10.000 bedeuten und die Gruppe A und Gruppe B kovalent an die Chromophorgruppe D gebunden sind.

3. Kontrastfarbstoff nach Anspruch 2, **dadurch gekennzeichnet, dass** x und z unabhängig voneinander jeweils eine ganze Zahl zwischen 1 und 8 bedeuten und y 1 oder 2 bedeutet.

4. Kontrastfarbstoff nach Anspruch 1**, dadurch gekennzeichnet, dass** der Kontrastfarbstoff eine Polymerhauptkette besitzt und die Gruppen A, D und B gemäß einer oder mehreren Strukturen aus der Gruppe bestehend aus AₓD_{y}B_{z}, AₓD_{y}, AₓB_{z}, D_{y}B_{z}, A, D und B kovalent an die Polymerhauptkette gebunden sind, wobei x und z unabhängig voneinander jeweils eine ganze Zahl zwischen 1 und 8 bedeuten und y 1 oder 2 bedeutet.

5. Kontrastfarbstoff nach einem der Ansprüche 1 bis 4, **dadurch gekennzeichnet, dass** die phosphorhaltige Gruppe, die in der Lage ist, mit der Oberfläche eines lithografischen Empfangselements zu reagieren, folgender Formel (I) entspricht : 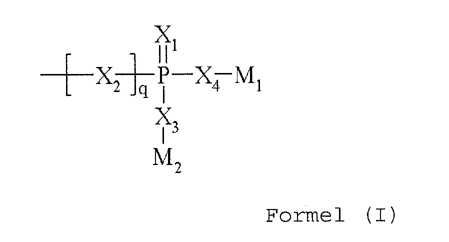 in der :
X₁, X₂, X₃ und X₄ unabhängig voneinander jeweils ein Sauerstoffatom oder ein Schwefelatom bedeuten,
q 0 oder 1 bedeutet,
M₁ ein Proton oder ein Gegenion zum Ausgleichen der Negativladung von X₄ bedeutet, und
M₂ ein Proton oder ein Gegenion zum Ausgleichen der Negativladung von X₃ bedeutet oder eine gegebenenfalls substituierte, gesättigte oder ungesättigte alifatische Kette oder eine gegebenenfalls substituierte Arylgruppe oder Heteroarylgruppe bedeutet.

6. Kontrastfarbstoff nach Anspruch 5, **dadurch gekennzeichnet, dass** die phosphorhaltige Gruppe, die in der Lage ist, mit der Oberfläche eines lithografischen Empfangselements zu reagieren, und Formel (I) entspricht, aus der Gruppe bestehend aus -O-PO₃H₂, -O-PO₃HR, -PO₃H₂ und -PO₃HR, wobei R eine Methylgruppe oder Ethylgruppe bedeutet, gewählt wird.

7. Kontrastfarbstoff nach einem der Ansprüche 1 bis 6, **dadurch gekennzeichnet, dass** die alifatische Gruppe zumindest 5 Fluoratome enthält.

8. Kontrastfarbstoff nach einem der Ansprüche 1 bis 7, **dadurch gekennzeichnet, dass** die alifatische Gruppe eine fluorierte geradkettige alifatische Gruppe mit zumindest 6 Kohlenstoffatomen umfasst.

9. Kontrastfarbstoff nach Anspruch 8, **dadurch gekennzeichnet, dass** die geradkettige alifatische Gruppe -(CF₂CF₂)ₙCF₃ bedeutet, wobei n eine ganze Zahl zwischen 3 und 20 bedeutet.

10. Kontrastfarbstoff nach einem der Ansprüche 1 bis 9, **dadurch gekennzeichnet, dass** die Chromophorgruppe D aus der Gruppe bestehend aus einem Azofarbstoff mit einem molaren Extinktionskoeffizienten von mehr als 10³/Mol⁻¹cm⁻¹, einem Anthrachinonfarbstoff, einem (Poly)methinfarbstoff, einem Azomethinfarbstoff, einem Disazofarbstoff, einem Carboniumfarbstoff, einem Styrylfarbstoff, einem Stilbenfarbstoff, einem Phthalocyaninfarbstoff, einem Cumarinfarbstoff, einem Arylcarboniumfarbstoff, einem Nitrofarbstoff, einem Naphtholactamfarbstoff, einem Dioxazinfarbstoff, einem Flavinfarbstoff und einem Formazanfarbstoff gewählt wird.

11. Eine lithografische Druckplatte, die einen Kontrastfarbstoff enthält, wobei der Kontrastfarbstoff zumindest eine A-Gruppe, D-Gruppe und B-Gruppe enthält, wobei :
A eine phosphorhaltige Gruppe bedeutet, die in der Lage ist, mit der Oberfläche eines lithografischen Empfangselements zu reagieren,
D eine Licht mit einer Wellenlänge zwischen 400 nm und 700 nm absorbierende Chromophorgruppe bedeutet und
B eine zumindest 6 Kohlenstoffatome enthaltende alifatische Gruppe bedeutet.

## Revendications

1. Un colorant de contraste pour la confection d'une plaque d'impression lithographique, ledit colorant de contraste contenant au moins un groupe A, un groupe D et un groupe B, **caractérisé en ce que** :
A représente un groupe contenant du phosphore capable d'entrer en réaction avec la surface d'un élément récepteur lithographique, D représente un groupe chromophore absorbant la lumière dont la longueur d'onde se situe entre 400 nm et 700 nm et
B représente un groupe aliphatique contenant au moins 6 atomes de carbone,
**caractérisé en ce que** le groupe aliphatique B contient au moins un atome de fluor.

2. Colorant de contraste selon la revendication 1, **caractérisé en ce que** le colorant de contraste présente la structure AₓD_{y}B_{z}, où x, y et z représentent, indépendamment l'un de l'autre, un nombre entier compris entre 1 et 10.000 et où le groupe A et le groupe B sont liés au groupe chromophore D par une liaison covalente.

3. Colorant de contraste selon la revendication 2, **caractérisé en ce que** x et z représentent, indépendamment l'un de l'autre, un nombre entier compris entre 1 et 8 et y représente 1 ou 2.

4. Colorant de contraste selon la revendication 1, **caractérisé en ce que** le colorant de contraste comprend une chaîne principale d'un polymère et que les groupes A, D et B sont liées à la chaîne principale du polymère par une liaison covalente selon une ou plusieurs structures choisies parmi le groupe composé de AₓD_{y}B_{z}, AₓD_{y}, AₓB_{z}, D_{y}B_{z}, A, D et B, où x et z représentent, indépendamment l'un de l'autre, un nombre entier compris entre 1 et 8 et y représente 1 ou 2.

5. Colorant de contraste selon l'une quelconque des revendications 1 à 4, **caractérisé en ce que** le groupe contenant du phosphore capable d'entrer en réaction avec la surface d'un élément récepteur lithographique, répond à la formule (I) suivante : 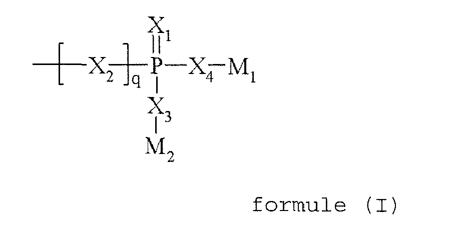 où :
X₁, X₂, X₃ et X₄ représentent, indépendamment l'un de l'autre, un atome d'oxygène ou un atome de soufre,
q représente 0 ou 1,
M₁ représente un proton ou un ion opposé compensateur de la charge négative de X₄, et
M₂ représente un proton ou un ion opposé compensateur de la charge négative de X₃ ou une chaîne aliphatique saturée ou insaturée éventuellement substituée ou un groupe aryle ou groupe hétéroaryle éventuellement substitué.

6. Colorant de contraste selon la revendication 5, **caractérisé en ce que** le groupe contenant du phosphore capable d'entrer en réaction avec la surface d'un élément récepteur lithographique et répondant à la formule (I) est choisi parmi le groupe composé de -O-PO₃H₂, -O-PO₃HR, -PO₃H₂ et -PO₃HR, où R représente un groupe méthyle ou un groupe éthyle.

7. Colorant de contraste selon l'une quelconque des revendications 1 à 6, **caractérisé en ce que** le groupe aliphatique contient au moins 5 atomes de fluor.

8. Colorant de contraste selon l'une quelconque des revendications 1 à 7, **caractérisé en ce que** le groupe aliphatique comprend un groupe aliphatique fluoré à chaînes droites contenant au moins 6 atomes de carbone.

9. Colorant de contraste selon la revendication 8, **caractérisé en ce que** le groupe aliphatique à chaînes droites répond à la formule -(CF₂CF₂)ₙCF₃, où n représente un nombre entier compris entre 3 et 20.

10. Colorant de contraste selon l'une quelconque des revendications 1 à 9, **caractérisé en ce que** le groupe chromophore D est choisi parmi le groupe composé d'un colorant azoïque présentant un coefficient d'extinction molaire supérieur à 10³/mole⁻¹cm⁻¹, d'un colorant d'anthraquinone, d'un colorant au (poly)méthine, d'un colorant à l'azométhine, d'un colorant disazoïque, d'un colorant au carbonium, d'un colorant styrylique, d'un colorant stilbénique, d'un colorant de phtalocyanine, d'un colorant de coumarine, d'un colorant à l'arylcarbonium, d'un colorant nitré, d'un colorant de naphtolactame, d'un colorant de dioxazine, d'un colorant de flavine et d'un colorant de formazane.

11. Une plaque d'impression lithographique contenant un colorant de contraste, ledit colorant de contraste contenant au moins un groupe A, un groupe D et un groupe B, **caractérisé en ce que** :
A représente un groupe contenant du phosphore capable d'entrer en réaction avec la surface d'un élément récepteur lithographique, D représente un groupe chromophore absorbant la lumière dont la longueur d'onde se situe entre 400 nm et 700 nm et
B représente un groupe aliphatique contenant au moins 6 atomes de carbone.
